(19) Europäisches Patentamt
European Patent Office
Office européen des brevets

(11) **EP 3 110 025 A1**

(12) **EUROPEAN PATENT APPLICATION**

(43) Date of publication:
**28.12.2016 Bulletin 2016/52**

(51) Int Cl.:
***H04B 1/525*** (2015.01)

(21) Application number: **16174756.3**

(22) Date of filing: **16.06.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.06.2015 JP 2015128987**
**02.11.2015 JP 2015216074**

(71) Applicant: **FUJITSU LIMITED**
**211-8588 Kanagawa (JP)**

(72) Inventors:
• **AOKI, Nobuhisa**
**Kawasaki-shi, Kanagawa 211-8588 (JP)**

• **KAWASAKI, Toshio**
**Kawasaki-shi, Kanagawa 211-8588 (JP)**
• **MANIWA, Toru**
**Kawasaki-shi, Kanagawa 211-8588 (JP)**
• **SATO, Tadahiro**
**Kawasaki-shi, Kanagawa 211-8588 (JP)**
• **TOBISU, Yusuke**
**Kawasaki-shi, Kanagawa 211-8588 (JP)**
• **ADACHI, Akifumi**
**Kawasaki-shi, Kanagawa 211-8588 (JP)**
• **ISHIZU, Eizou**
**Fukuoka-shi, Fukuoka 814-8588 (JP)**

(74) Representative: **Cooper-Rolfe, Elizabeth Louise**
**Haseltine Lake LLP**
**Lincoln House, 5th Floor**
**300 High Holborn**
**London WC1V 7JH (GB)**

(54) **COMMUNICATION DEVICE AND RECEIVING METHOD**

(57) A communication device includes a sending unit that sends a plurality of signals that are to be wirelessly sent with different frequencies; an acquiring unit that acquires a reception signal to which an intermodulation signal that is produced due to intermodulation of the plurality of signals is added; and a processor that is connected to the sending unit and the acquiring unit. The processor generates, on the basis of the plurality of signals sent by the sending unit, a cancellation signal corresponding to the intermodulation signal and combines the generated cancellation signal with the reception signal acquired by the acquiring unit.

FIG.1

**Description**

FIELD

The embodiments discussed herein are directed to a communication device and a receiving method.

BACKGROUND

Conventionally, duplexers may sometimes be provided in radio communication apparatuses that share an antenna when transmission and reception are performed. Namely, if the frequency of a transmission signal is different from that of a reception signal, by connecting a duplexer to an antenna, a transmission path and a reception path inside a radio communication apparatus are electrically separated. Consequently, the transmission signal does not interfere with the reception signal and thus it is possible to suppress a decrease in the reception quality.

However, a duplexer is mainly constituted by a filter and it is difficult to completely prevent the transmission signal from leaking to the reception path. Therefore, both the leaking transmission signal and the received interference signal are subjected to intermodulation in the reception path and the reception quality may possibly be decreased due to the produced intermodulation signal. Namely, if the frequency of the transmission signal is different from the frequency of the interference signal, an intermodulation signal is produced at a predetermined frequency due to the intermodulation of these signals. Then, if the frequency of the intermodulation signal is included in the frequency band of the reception signal, the demodulation and the decoding of the reception signal are inhibited by the intermodulation signal. Consequently, the accuracy of reception data obtained from the reception signal is decreased. Thus, studies have been conducted on a method of, for example, approximately regenerating an intermodulation signal from both the transmission signal and the interference signal and cancelling out the intermodulation signal by the regenerated regenerative signal.

Patent Document 1: Japanese National Publication of International Patent Application No. 2009-526442

Non-Patent Document 1: 3GPP TR37.808 v12.0.0 "Passive Intermodulation (PIM) handling for Base Stations (BS) (Release 12)"

In recent years, multicarrier transmission that transmits signals by using a plurality of carriers with different frequencies has been put to practical use. With the multicarrier transmission, because a transmission signal includes therein signals with different frequencies, an intermodulation signal may possibly be produced due to intermodulation between the signals with different frequencies. Then, the intermodulation signal produced from the transmission signal leaks into the reception path and decreases the reception quality. In particular, if the frequency of the intermodulation signal produced from the transmission signal is included in the frequency band of the reception signal, there is a problem in that it is difficult to accurately demodulate and decode the reception signal.

Furthermore, a cable that connects a duplexer and an antenna and a cable that connects a duplexer and an antenna are passive components and the degree of contribution to the production of nonlinear distortion is smaller than an active device, such as an amplifier or the like. However, an intermodulation signal produced from a transmission signal may possibly leak into a reception path due to a change in minute impedance in these passive components or due to non-linear characteristics and may possibly decrease the reception quality. Furthermore, the reception quality may possibly be decreased because an intermodulation signal produced from a transmission signal is reflected to a reception path due to a metal or the like that is present outside a radio communication apparatus.

Furthermore, unlike inter modulation distortion in, for example, an amplifier or the like, the intermodulation signals produced from the transmission signal that includes therein signals with different frequencies sometimes have the characteristic of electrical power that is different from a theoretical value. Consequently, by only simply approximating the intermodulation signal using a conventional model, a regenerative signal that sufficiently approximates an intermodulation signal is not able to be obtained; therefore, it is difficult to cancel out the intermodulation signal that leaks into the reception path by using a regenerative signal.

Accordingly, it is desirable to provide a communication device and a receiving method that can suppress a decrease in the reception quality due to an intermodulation signal even when a transmission signal that includes therein signals with different frequencies is sent.

SUMMARY

According to an embodiment of one aspect of the invention, a communication device includes: a sending unit that sends a plurality of signals that are to be wirelessly sent with different frequencies; an acquiring unit that acquires a reception signal to which an intermodulation signal that is produced due to intermodulation of the plurality of signals is added; and a processor that is connected to the sending unit and the acquiring unit, wherein the processor executes a process including: generating, on the basis of the plurality of signals sent by the sending unit, a cancellation signal corresponding to the intermodulation signal; and combining the generated cancellation signal with the reception signal that is acquired by the acquiring unit.

BRIEF DESCRIPTION OF DRAWINGS

The invention is described, by way of example only, with reference to the following drawings, in which:

FIG. 1 is a block diagram illustrating the configuration of a radio communication apparatus according to a first embodiment;
FIG. 2 is a block diagram illustrating the function of a processor according to the first embodiment;
FIG. 3 is a flowchart illustrating the flow of a reception process according to the first embodiment;
FIG. 4 is a schematic diagram illustrating a specific example of a cancellation signal according to the first embodiment;
FIG. 5 is a schematic diagram illustrating a specific example of the effect according to the first embodiment;
FIG. 6 is a flowchart illustrating a reception process according to a second embodiment;
FIG. 7 is a schematic diagram illustrating a specific example of a cancellation signal according to the second embodiment;
FIG. 8 is a schematic diagram illustrating a specific example of the effect according to the second embodiment;
FIG. 9 is a flowchart illustrating a reception process according to a third embodiment;
FIG. 10 is a schematic diagram illustrating a specific example of a cancellation signal according to the third embodiment;
FIG. 11 is a schematic diagram illustrating a specific example of a cancellation signal according to the third embodiment;
FIG. 12 is a schematic diagram illustrating a specific example of a cancellation signal according to the third embodiment;
FIG. 13 is a flowchart illustrating a reception process according to a fourth embodiment;
FIG. 14 is a schematic diagram illustrating a specific example of a cancellation signal according to the fourth embodiment;
FIG. 15 is a block diagram illustrating the function of a processor according to a fifth embodiment;
FIG. 16 is a block diagram illustrating the function of a processor according to a sixth embodiment;
FIG. 17 is a block diagram illustrating the configuration of a radio communication apparatus according to a seventh embodiment;
FIG. 18 is a block diagram illustrating the configuration of a radio communication apparatus according to an eighth embodiment;
FIG. 19 is a block diagram illustrating a modification of the radio communication system according to the eighth embodiment;
FIG. 20 is a block diagram illustrating the function of a processor according to the eighth embodiment;
FIG. 21 is a block diagram illustrating another modification of the radio communication system according to the eighth embodiment; and
FIG. 22 is a block diagram illustrating the configuration of a radio communication system according to a ninth embodiment.

DESCRIPTION OF EMBODIMENTS

Preferred embodiments of a communication device and a receiving method disclosed in the present invention will be described in detail below with reference to the accompanying drawings. The present invention is not limited to the embodiments described below. Furthermore, in a description below, it is assumed that the frequency of a transmission signal is different from the frequency of a reception signal and it is assumed that the transmission signal includes signals with different frequencies.

[a] First Embodiment

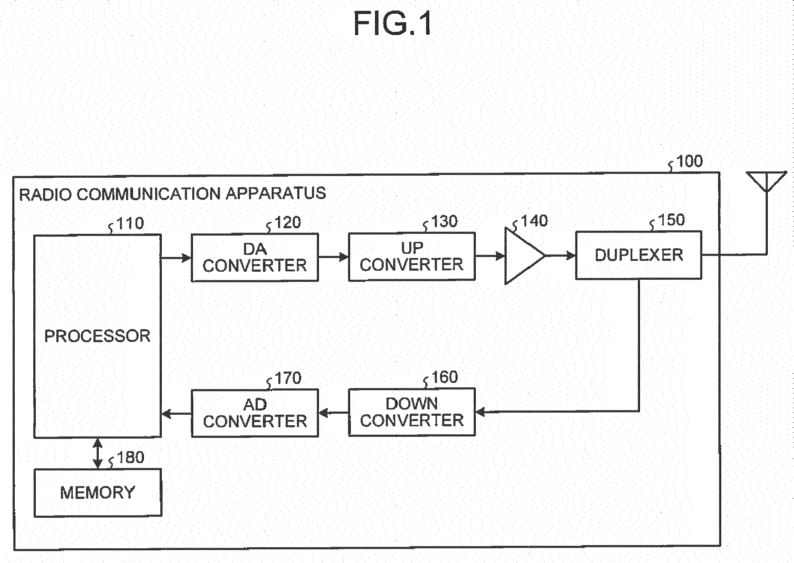

FIG. 1 is a block diagram illustrating the configuration of a radio communication apparatus 100 according to a first embodiment. The radio communication apparatus 100 illustrated in FIG. 1 includes a processor 110, a digital analogue (DA) converter 120, an up converter 130, an amplifier 140, a duplexer 150, a down converter 160, an analogue digital (AD) converter 170, and a memory 180.

The processor 110 includes, for example, a central processing unit (CPU), a field programmable gate array (FPGA), a digital signal processor (DSP), or the like and generates, from transmission data, a transmission signal that includes therein a plurality of signals that are to be sent by different frequencies. Furthermore, the processor 110 obtains reception data from a reception signal. Furthermore, the processor 110 generates, on the basis of the transmission signal, a cancellation signal that is used to cancel an intermodulation signal that is included in the reception signal and cancels out the intermodulation signal included in the reception signal by using the cancellation signal. The function of the processor 110 will be described in detail later.

The DA converter 120 performs DA conversion on the transmission signal that is output from the processor 110 and then outputs the obtained analog transmission signal to the up converter 130. This transmission signal includes a plurality of signals that are to be sent with different frequencies.

The up converter 130 up-converts the transmission signal that is output from the DA converter 120 to the radio frequency and generates a radio transmission signal in which a plurality of signals included in the transmission signal is placed in each of the carriers with different frequencies. Namely, the up converter 130 generates a radio transmission signal that includes therein a plurality of signals with different frequencies. Then, the up converter 130 outputs the generated radio transmission signal to the amplifier 140.

The amplifier 140 amplifies the radio transmission signal that is output from the up converter 130.

The duplexer 150 sends the radio transmission signal that is output from the amplifier 140 via a connector, a cable, and an antenna. Furthermore, the duplexer 150 outputs, to the down converter 160, the radio reception signal that is received by the antenna and that passes through the cable and the connector. Because the frequency of the radio transmission signal is different from the frequency of the radio reception signal, the duplexer 150 electrically separates both the transmission path and the reception path and prevents the radio transmission signal from leaking into the reception path. The path between the duplexer 150 and the antenna includes, for example, passive components, such as connectors, cables, antennas, and the like. Then, an intermodulation signal is produced due to intermodulation of the plurality of signals that are included in the radio transmission signal due to a point of discontinuity of the impedance of the passive components or the minute nonlinear distortion generated in the passive component. Furthermore, because the path between the duplexer 150 and the antenna becomes a pass route for both the radio transmission signal and the radio reception signal, in this pass route, the intermodulation signal produced from the radio transmission signal is added to the radio reception signal.

Furthermore, if separation of the path performed by the duplexer 150 is not perfect, the intermodulation signal that is produced due to intermodulation of the plurality of signals included in the radio transmission signal leaks into the reception path. Furthermore, the plurality of signals included in the radio transmission signal sent from the antenna is subjected to intermodulation by a metal or the like that is present outside the radio communication apparatus 100 and an intermodulation signal may possibly be produced. The produced intermodulation signal is received by the antenna of the radio communication apparatus 100 and leaks into the reception path. Then, in particular, a third-order distortion component that is generated due to the intermodulation between the two signals included in the radio transmission signal interferes with the radio reception signal. Namely, in the embodiment, because the frequency of the third-order distortion component is included in the frequency band of the radio reception signal, in the pass route of the signal from the duplexer 150 to the antenna described above, the third-order distortion component is added to the radio reception signal.

The down converter 160 down-converts the radio reception signal, which is output from the duplexer 150, to the baseband frequency and outputs the obtained reception signal with the baseband frequency to the AD converter 170. The third-order distortion component that is produced due to the intermodulation of the transmission signal is added to this reception signal.

The AD converter 170 performs the AD conversion on the reception signal that is output from the down converter 160 and then outputs the obtained digital reception signal to the processor 110.

The memory 180 includes, for example, a random access memory (RAM), a read only memory (ROM), or the like and stores therein information that is used by the processor 110 to perform a process. Namely, the memory 180 stores therein a parameter or the like that is used when, for example, the processor 110 generates a cancellation signal.

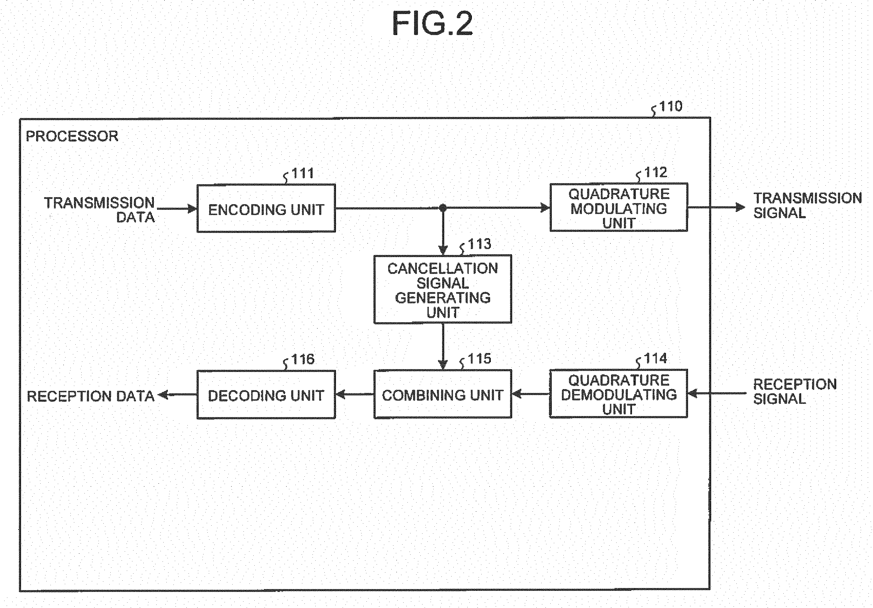

FIG. 2 is a block diagram illustrating the function of the processor 110 according to the first embodiment. The processor 110 illustrated in FIG. 2 includes an encoding unit 111, a quadrature modulating unit 112, a cancellation signal generating unit 113, a quadrature demodulating unit 114, a combining unit 115, and a decoding unit 116. Furthermore, each of the processing units may also be constituted by hardware or may also be constituted by software.

The encoding unit 111 encodes transmission data and outputs the obtained encoding signal to the quadrature modulating unit 112 and the cancellation signal generating unit 113.

The quadrature modulating unit 112 performs quadrature modulation on the encoding signal and generates a transmission signal that includes therein a plurality of signals that are to be sent with different frequencies. Then, the quadrature modulating unit 112 outputs the generated transmission signal to the DA converter 120.

The cancellation signal generating unit 113 generates, from the plurality of signals included in the transmission signal, a cancellation signal that is used to cancel out the intermodulation signal that is added to the reception signal in the reception path. Specifically, the cancellation signal generating unit 113 acquires, from the transmission signal, two baseband signals associated with signals that produce a third-order distortion component having the frequency included in the frequency band of the radio reception signal and then generates a cancellation signal by using a model that represents the third-order distortion component obtained from the product of the power of these baseband signals. At this time, the cancellation signal generating unit 113 reads the order of the power related to each of the baseband signals from the memory 180 and calculates a third-order distortion component by using the model with the read order. Then, the cancellation signal generating unit 113 outputs the calculated third-order distortion component to the combining unit 115 as a cancellation signal.

Here, the order that is read by the cancellation signal generating unit 113 from the memory 180 is not limited to an integer. Normally, a third-order distortion component IM(t) produced due to the intermodulation of the two signals A(t) and B(t) with different frequencies is represented by Equation (1) below.

$$\mathrm{IM(t)=A(t)^2 \times B(t)^*} \hspace{6cm} (1)$$

where, in Equation (1), B(t) represents the complex conjugate of the signal B(t). In this way, in the model that calculates a normal third-order distortion component, the order related to the signal A(t) is two and the order related to the signal B(t) is one; however, in the embodiment, these orders are not limited to integers. Furthermore, the order is previously determined by measuring, when, for example, the radio communication apparatus 100 is designed, manufactured, or the like, the intermodulation signal produced due to the transmission signal and the order is stored in the memory 180.

Specifically, the electrical power of the third-order distortion component IM(t) in the case where one of the electrical power of the signal B(t) is fixed and the other one of the electrical power of the signal A(t) is changed is measured and, then, the order related to the signal A(t) is previously determined on the basis of the measurement result. Similarly, the electrical power of the third-order distortion component IM(t) in the case where the electrical power of the signal A(t) is fixed and the electrical power of the signal B(t) is changed is measured and, then, the order related to the signal B(t) is previously determined on the basis of the measurement result. When the order is determined, for example, the measurement results obtained from a pair of the electrical power are plotted and the inclination of the straight line obtained from the plot of the plurality of measurement results is used as the order. In this way, because the order of the model in accordance with the characteristic of the radio communication apparatus 100 is previously stored in the memory 180, the cancellation signal generating unit 113 can generate a cancellation signal associated with the intermodulation signal produced from the transmission signal.

The quadrature demodulating unit 114 performs quadrature demodulation on the reception signal and outputs the obtained demodulated signal to the combining unit 115.

The combining unit 115 combines the demodulated signal, which is output from the quadrature demodulating unit 114 and to which the third-order distortion component is added, with the cancellation signal that is generated by the cancellation signal generating unit 113. Namely, by combining the reception signal with the cancellation signal, the combining unit 115 cancels out the third-order distortion component that is added to the reception signal.

The decoding unit 116 decodes the demodulated signal in which the third-order distortion component is cancelled out by the combining unit 115 and obtains the reception data.

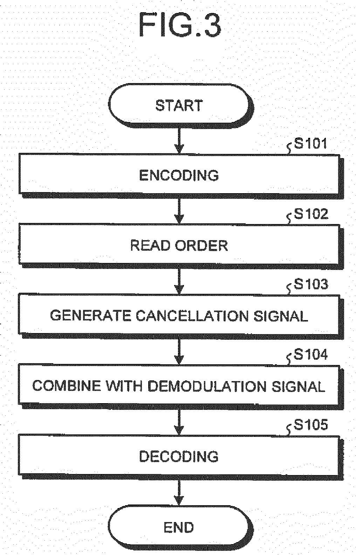

In the following, a reception process performed in the radio communication apparatus 100 having the configuration described above will be described with reference to the flowchart illustrated in FIG. 3.

In the radio communication apparatus 100, the transmission data is encoded by the encoding unit 111 (Step S101) and is subjected to quadrature modulation by the quadrature modulating unit 112, whereby a transmission signal that includes therein a plurality of signals that are to be sent with different frequencies is generated. The intermodulation signal that is produced from intermodulation of the plurality of signals included in this transmission signal is added to the reception signal.

Thus, because the association between the encoded baseband signals and the plurality of signals with different frequencies is known, by inputting an encoded baseband signal to the cancellation signal generating unit 113, a cancellation signal that is used to cancel the intermodulation signal that is added to the reception signal is generated. Specifically, the order of the model from which an intermodulation signal is obtained is read by the cancellation signal generating unit 113 from the memory 180 (Step S102). Then, by using the order of the model read by the cancellation signal generating unit 113, a cancellation signal that corresponds to the intermodulation signal that is added to the reception signal is generated (Step S103).

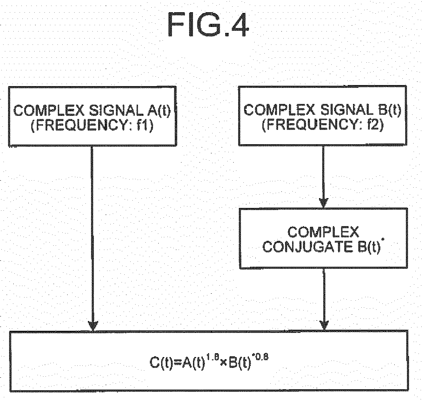

More specifically, the cancellation signal is generated in a manner illustrated in, for example, FIG. 4. Namely, consider the case in which a complex signal A(t) with the frequency f1 and a complex signal B(t) with the frequency f2 are included in a transmission signal and the third-order distortion component that is produced due to these complex signal leaks into the reception path and is added to the reception signal. In this case, as illustrated in FIG. 4, the complex conjugate B(t)* of the complex signal B(t) is calculated by the cancellation signal generating unit 113 and a cancellation signal C(t) is obtained by the model. Here, it is assumed that, as a result of reading the order of the model from the memory 180, the order related to the complex signal A(t) is 1.8 and the order related to the complex signal B(t) is 0.8.

Accordingly, the cancellation signal C(t) can be obtained by Equation (2) below.

$$C(t)=A(t)^{1.8} \times B(t)^{*0.8} \hspace{4cm} (2)$$

The order 1.8 related to the complex signal A(t) and the order 0.8 related to the complex signal B(t) are determined as the order that approximates the measurement result of the electrical power of the intermodulation signal at the time of, for example, manufacturing the radio communication apparatus 100 and correctly indicate the intermodulation signal that is actually produced. Consequently, the cancellation signal C(t) approximates the intermodulation signal produced from the transmission signal with high accuracy.

The cancellation signal generated in this way is output from the cancellation signal generating unit 113 to the combining unit 115. In contrast, the reception signal is subjected to quadrature demodulation by the quadrature demodulating unit 114 and is output to the combining unit 115. Then, because the reception signal to which the third-order distortion component produced from the transmission signal is added is combined with the cancellation signal by the combining unit 115 (Step S104), the third-order distortion component is removed from the reception signal. The reception signal from which the third-order distortion component has been removed is decoded by the decoding unit 116 (Step S105), whereby reception data is obtained.

In this way, the intermodulation signal added to the reception signal is cancelled out by generating a cancellation signal by using a model with the order that is previously determined on the basis of the measurement result of the intermodulation signal and by combining the cancellation signal with the reception signal. Consequently, it is possible to cancel the intermodulation signal with high accuracy that is added to the reception signal produced due to intermodulation of the plurality of signals that are included in the transmission signal and it is possible to improve the accuracy of decoding the reception signal. In other words, even if a transmission signal that includes therein signals with a plurality of frequencies is sent, it is possible to suppress a decrease in the reception quality due to the intermodulation signal.

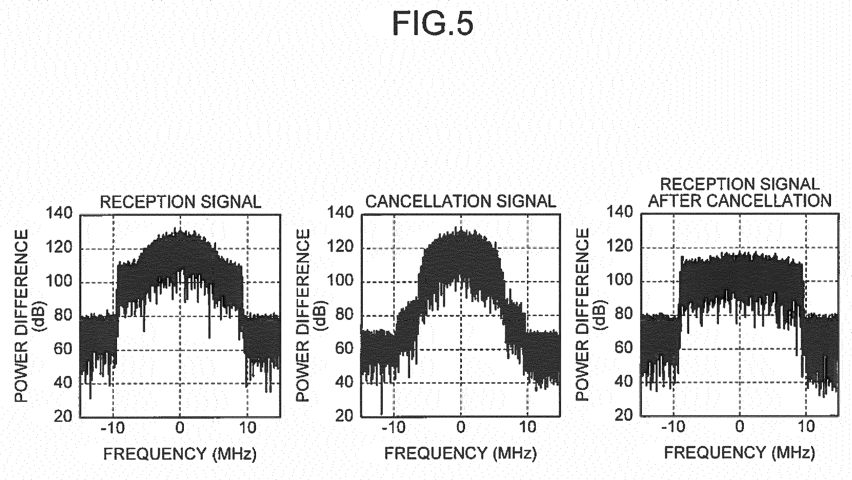

FIG. 5 is a schematic diagram illustrating a specific example of the effect according to the first embodiment. The reception signal illustrated on the left side in FIG. 5 includes the third-order distortion component and an electrical power difference of the average electrical power from the predetermined electrical power is 122.2292 dB. If the cancellation signal illustrated in the middle in FIG. 5 is combined with this reception signal and then the third-order distortion component is cancelled, the reception signal illustrated on the right side in FIG. 5 is obtained. Here, the cancellation signal illustrated in the middle in FIG. 5 is generated by using, as described above, the model with the order that is previously determined on the basis of the measurement result of the intermodulation signal. The electrical power difference of the reception signal from the predetermined electrical power illustrated on the right side in FIG. 5 is 108.6475 dB and is smaller than the electrical power difference of the reception signal from the predetermined electrical power illustrated on the left side in FIG. 5 by 13.5817 dB. Namely, the intermodulation signal with 13.5817 dB is cancelled and, in the reception signal illustrated on the right side in FIG. 5, a favorable spectrum that has a rectangular shape can be obtained.

As described above, according to the embodiment, a cancellation signal is generated by using a model with the order that is previously determined on the basis of the measurement result of the intermodulation signal that is produced due to intermodulation of the plurality of signals that are included in a transmission signal and the cancellation signal is combined with the reception signal. Consequently, it is possible to cancel the intermodulation signal with high accuracy that leaks into the reception path and that is added to the reception signal, thereby improving the accuracy of decoding the reception signal. In other words, even if a transmission signal that includes therein signals with a plurality of frequencies is sent, it is possible to suppress a decrease in the reception quality due to the intermodulation signal.

[b] Second Embodiment

The characteristic of a second embodiment is that a cancellation signal is generated by correcting a theoretical intermodulation signal by using a correction coefficient on the basis of the sum of the amplitudes of the plurality of the signals that are included in the transmission signal.

The configuration of a radio communication apparatus and the function of a processor according to the second embodiment are the same as those in the first embodiment (FIGS. 1 and 2); therefore, descriptions thereof will be omitted. In the second embodiment, a method of generating a cancellation signal performed by the cancellation signal generating unit 113 is different from that described in the first embodiment. Accordingly, in the following, a reception process of generating a cancellation signal according to the second embodiment will be described.

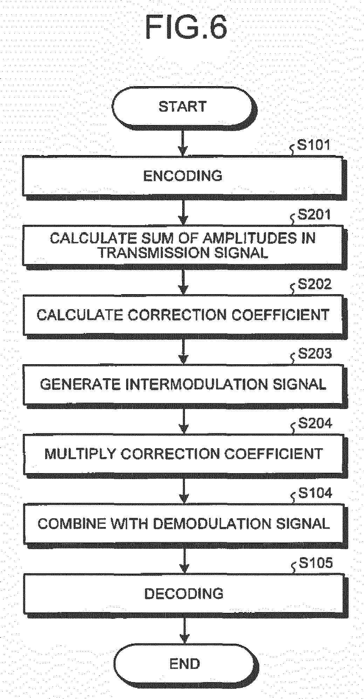

FIG. 6 is a flowchart illustrating a reception process according to a second embodiment. In FIG. 6, components having the same configuration as those illustrated in FIG. 3 are assigned the same reference numerals.

In the radio communication apparatus 100 according to the second embodiment, the transmission data is encoded by the encoding unit 111 (Step S101) and is subjected to quadrature modulation by the quadrature modulating unit 112, whereby a transmission signal that includes therein a plurality of signals that are to be sent with different frequencies. The intermodulation signal that is produced from intermodulation of the plurality of signals included in this transmission signal is added to a reception signal.

Thus, because the association between the encoded baseband signals and the plurality of signals with different frequencies is known, by inputting an encoded baseband signal to the cancellation signal generating unit 113, a cancellation signal that is used to cancel the intermodulation signal that is added to the reception signal is generated. Specifically, the sum of the amplitudes of the plurality of signals included in the transmission signal is calculated by the cancellation signal generating unit 113 (Step S201) and a correction coefficient is calculated by a function in which the sum of the amplitudes is a variable (Step S202). The function that is used here may also be a function that linearly varies, such as a primary function, or may also be another function that varies with a curved form.

Furthermore, a theoretical intermodulation signal produced from the plurality of signals that are included in the transmission signal is obtained by Equation (1) above by the cancellation signal generating unit 113 (Step S203). Then, by multiplying a correction coefficient by the obtained theoretical intermodulation signal (Step S204), a cancellation signal corresponding to the intermodulation signal that is added to the reception signal is generated.

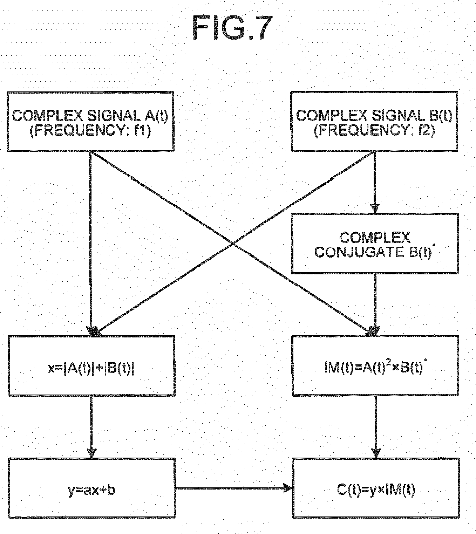

To give a more specific example, the cancellation signal is generated, for example, in a manner illustrated in FIG. 7. Namely, consider the case in which the complex signal A(t) with the frequency f1 and the complex signal B(t) with the frequency f2 are included in a transmission signal and the third-order distortion component that is produced by these complex signals leaks into the reception path and is added to the reception signal. In this case, as illustrated in FIG. 7, the complex conjugate B(t)* of the complex signal B(t) is calculated by the cancellation signal generating unit 113 and the theoretical third-order distortion component IM(t) is obtained by Equation (1) above. Furthermore, the sum x of the amplitudes of the complex signal A(t) and the complex signal B(t) is obtained by the cancellation signal generating unit 113 by using Equation (3) below.

$$x = |A(t)| + |B(t)| \tag{3}$$

where, in Equation (3), $|\alpha|$ is a symbol representing the amplitude of $\alpha$. Furthermore, a correction coefficient y is calculated by the primary function $y = ax + b$ (a and b are predetermined coefficients) in which the sum x of the amplitudes is a variable. Then, a cancellation signal C(t) is obtained by multiplying the correction coefficient y by the theoretical third-order distortion component IM(t).

In the second embodiment, the cancellation signal C(t) is generated by obtaining the theoretical intermodulation signal IM(t) and then by correcting the intermodulation signal IM(t) by the correction coefficient y that is in accordance with the sum x of the amplitudes. Consequently, the order of the power calculation for obtaining the intermodulation signal IM(t) is an integer and thus the processing load related to the calculation or the size of the circuit is not increased. Furthermore, because the cancellation signal C(t) is generated by correcting the theoretical intermodulation signal IM(t) on the basis of the sum x of the amplitudes of the signals that actually produce an intermodulation signal, the cancellation signal C(t) approximates the intermodulation signal produced from the transmission signal with high accuracy.

The cancellation signal generated in this way is output from the cancellation signal generating unit 113 to the combining unit 115. In contrast, the reception signal is subjected to quadrature demodulation by the quadrature demodulating unit 114 and is output to the combining unit 115. Then, the reception signal to which the third-order distortion component produced from the transmission signal is added is combined with the cancellation signal by the combining unit 115 (Step S104), whereby the third-order distortion component is removed from the reception signal. The reception signal from which the third-order distortion component has been removed is decoded by the decoding unit 116 (Step S105), whereby the reception data can be obtained.

In this way, the intermodulation signal that is added to the reception signal is canceled out by generating a cancellation signal by correcting the theoretical intermodulation signal by using a correction coefficient on the basis of the sum of the amplitudes of the actual signals and by combining the cancellation signal with the reception signal. Consequently, it is possible to cancel the intermodulation signal that is added to the reception signal produced due to the intermodulation of the plurality of signals included in the transmission signal with high accuracy and it is possible to improve the accuracy of decoding the reception signal. In other words, even if a transmission signal that includes therein signals with a plurality of frequencies is sent, it is possible to suppress a decrease in the reception quality due to the intermodulation signal.

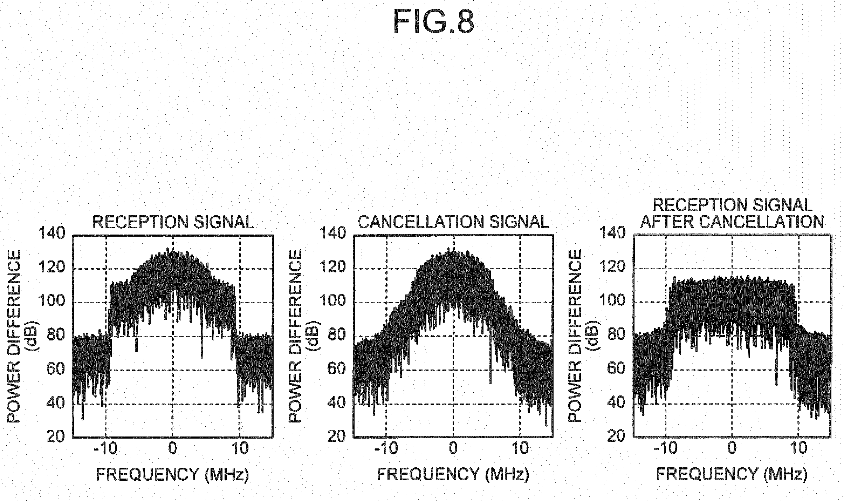

FIG. 8 is a schematic diagram illustrating a specific example of the effect according to the second embodiment. The reception signal illustrated on the left side in FIG. 8 includes therein the third-order distortion component and, similarly to the first embodiment (the drawing on the left side illustrated in FIG. 5), the electrical power difference of the average electrical power from the predetermined electrical power is 122.2292 dB. If the cancellation signal illustrated in the middle in FIG. 8 is combined with this reception signal and then third-order distortion component is cancelled, the reception signal illustrated in the middle in FIG. 8 is obtained. Here, the cancellation signal illustrated in the middle in FIG. 8 is generated by, as described above, multiplying a correction coefficient on the basis of the sum of the amplitudes of the respective signals by the theoretical intermodulation signal. The electrical power difference of the reception signal from the predetermined electrical power illustrated on the right side in FIG. 8 is 105.4408 dB and is smaller than the electrical power difference of the reception signal from the predetermined electrical power illustrated on the left side in FIG. 8 by 16.7884 dB. Namely, the intermodulation signal with 16.7884 dB is cancelled and, in the reception signal illustrated on the right side in FIG. 8, a favorable spectrum that has a rectangular shape can be obtained.

As described above, according to the embodiment, a cancellation signal is generated by correcting the theoretical intermodulation signal by using a correction coefficient that is on the basis of the sum of the amplitudes of the actual signals and then and the cancellation signal is combined with the reception signal. Consequently, it is possible to cancel the intermodulation signal that leaks into the reception path and that is added to the reception signal with high accuracy and it is possible to improve the accuracy of decoding of the reception signal. In other words, even if a transmission signal that includes therein signals with a plurality of frequencies is sent, it is possible to suppress a decrease in the reception quality due to the intermodulation signal. Furthermore, the order of the power calculation from which an intermodulation signal is obtained is an integer and thus the processing load related to the calculation or the size of the circuit is not increased.

Furthermore, in the second embodiment described above, a correction coefficient is calculated by using the function in which the sum of the amplitudes is a variable; however, the function is not always needed to be used. Namely, for example, it may also be possible to acquire the correction coefficient associated with the amplitude of each of the signals by previously storing a table in which a correction coefficient associated with the amplitude of each of the signals in the memory 180 and by referring to the table performed by the cancellation signal generating unit 113.

[c] Third Embodiment

The characteristic of a third embodiment is that a cancellation signal is generated by correcting a theoretical intermodulation signal by using a correction coefficient that is obtained on the basis of the amplitude of the plurality of signals included in the transmission signal. In the second embodiment described above, a correction coefficient is calculated on the basis of the sum of the amplitudes of the plurality of signals included in the transmission signal; however, the correction coefficient is not always calculated on the basis of the sum of the amplitudes. Accordingly, in the third embodiment, a description will be given of generating a cancellation signal by using another correction coefficient.

The configuration of a radio communication apparatus according to the third embodiment and the function of the processor are the same as those described in the first embodiment (FIGS. 1 and 2); therefore, descriptions thereof will be omitted. In the third embodiment, a method of generating a cancellation signal performed by the cancellation signal generating unit 113 is different from that described in the first and the second embodiments. Accordingly, in the following, a reception process of generating a cancellation signal according to the third embodiment will be described.

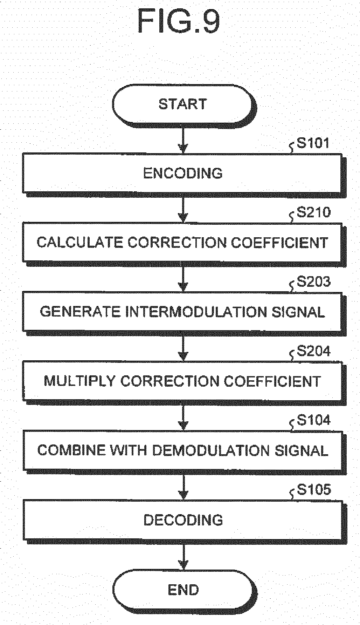

FIG. 9 is a flowchart illustrating a reception process according to a third embodiment. In FIG. 9, components having the same configuration as those illustrated in FIGS. 3 and 6 are assigned the same reference numerals.

In the radio communication apparatus 100 according to the third embodiment, the transmission data is encoded by the encoding unit 111 (Step S101) and is subjected to quadrature modulation by the quadrature modulating unit 112, whereby a transmission signal that includes therein a plurality of signals that are to be sent with different frequencies are generated. The intermodulation signal generated from intermodulation of the plurality of signals included in this transmission signal is added to the reception signal.

Thus, because the association between the encoded baseband signals and the plurality of signals with different frequencies is known, by inputting an encoded baseband signal to the cancellation signal generating unit 113, a cancellation signal that is used to cancel the intermodulation signal that is added to the reception signal is generated. Specifically, the amplitude of the plurality of signals included in the transmission signal is calculated by the cancellation signal generating unit 113 and a correction coefficient is calculated by the function in which the amplitude is a variable (Step S210). The function that is used here may also be a function that linearly varies, such as a primary function or may also be a higher-order function of the second order or more.

Furthermore, a theoretical intermodulation signal produced from the plurality of signals that are included in the transmission signal is obtained by Equation (1) above by the cancellation signal generating unit 113 (Step S203). Then, by multiplying a correction coefficient by the obtained theoretical intermodulation signal (Step S204), a cancellation signal corresponding to the intermodulation signal that is added to the reception signal is generated.

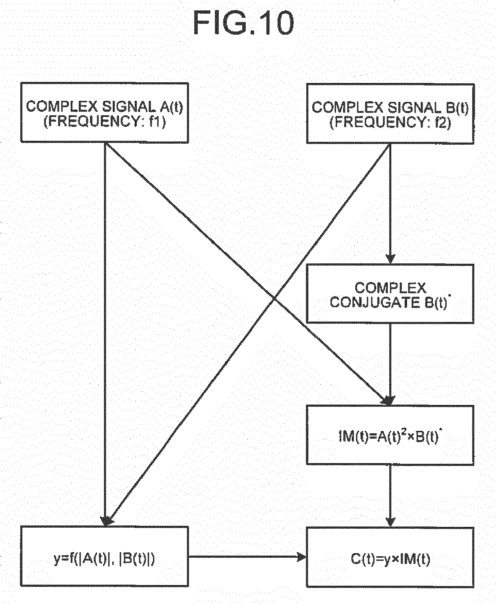

In the following, a description will be given by giving three specific examples of the cancellation signal according to the third embodiment with reference to FIGS. 10 to 12.

Specific Example 1

First, as illustrated in FIG. 10, consider the case in which the complex signal A(t) with the frequency f1 and the complex signal B(t) with the frequency f2 are included in a transmission signal and the third-order distortion component that is produced by these complex signal leaks into the reception path and is added to the reception signal. In this case, the complex conjugate B(t)* of the complex signal B(t) is calculated by the cancellation signal generating unit 113 and the theoretical third-order distortion component IM(t) is obtained by Equation (1) above. Furthermore, a correction coefficient y is calculated by the cancellation signal generating unit 113 by using the function f(|A(t)|, |B(t)|) in which the amplitudes of the complex signal A(t) and the complex signal B(t) are variables. This correction coefficient y is multiplied by the theoretical third-order distortion component IM(t) and the cancellation signal C(t) is obtained.

The function for calculating a correction coefficient y varies in accordance with the relationship between the characteristic z of the generation source of the intermodulation signal and the sum w of the transmission signals that are associated with the two complex signals A(t) and B(t). Namely, for example, if the sum w of the transmission signals and the characteristic z of the intermodulation signal generation source can be represented by Equation (4) below, the correction coefficient y can be represented by Equation (5) below.

$$z = a_1 w + a_3 w^3 + a_5 w^5 \qquad (4)$$

$$y = (a_5 \cdot (p_1 \cdot |A(t)|^2 + p_2 \cdot |B(t)|^2) + a_3) \qquad (5)$$

where, each of $a_1$, $a_3$, $a_5$, $p_1$, and $p_2$ is a predetermined coefficient. Similarly, for example, if the sum w of the transmission signals and the characteristic z of the intermodulation signal generation source can be represented by Equation (6) below, the correction coefficient y can be represented by Equation (7) below.

$$z = a_1 w + a_3 w^3 + a_5 w^5 + a_7 w^7 \qquad (6)$$

$$y = (a_7 \cdot (q_1 \cdot |A(t)|^4 + q_2 \cdot |A(t)|^2 \cdot |B(t)|^2 + q_3 \cdot |B(t)|^4) + a_5 \cdot (p_1 \cdot |A(t)|^2 + p_2 \cdot |B(t)|^2) + a_3)) \qquad (7)$$

where, each of $a_7$, $q_1$, $q_2$, and $q_3$ is also a predetermined coefficient. Furthermore, for example, if the sum w of the transmission signals and the characteristic z of the intermodulation signal generation source can be represented by Equation (8) below, the correction coefficient y can be represented by Equation (9) below.

$$z = a_1 w + a_3 w^3 + a_5 w^5 + a_7 w^7 + a_9 w^9 \qquad (8)$$

$$y = (a_9 \cdot (r_1 \cdot |A(t)|^6 + r_2 \cdot |A(t)|^4 \cdot |B(t)|^2 + r_3 \cdot |A(t)|^2 \cdot |B(t)|^4 + r_4 \cdot |B(t)|^6) + a_7 \cdot (q_1 \cdot |A(t)|^4 + q_2 \cdot |A(t)|^2 \cdot |B(t)|^2 + q_3 \cdot |B(t)|^4) + a_5 \cdot (p_1 \cdot |A(t)|^2 + p_2 \cdot |B(t)|^2) + a_3)) \qquad (9)$$

where, each of $a_9$, $r_1$, $r_2$, $r_3$, and $r_4$ is also a predetermined coefficient. Furthermore, it is also possible to approximate the term of the power of each of the amplitudes by the term of the corresponding amplitude itself. Namely, for example, instead of Equation (9) above, a correction coefficient y may also be obtained by using Equation (10) below.

$$y = (a_9 \cdot (r_1 \cdot |A(t)|^6 + r_2 \cdot |A(t)|^4 \cdot |B(t)|^2 + r_3 \cdot |A(t)|^2 \cdot |B(t)|^4 + r_4 \cdot |B(t)|^6) + a_7 \cdot (q_1 \cdot |A(t)|^4 + q_2 \cdot |A(t)|^2 \cdot |B(t)|^2 + q_3 \cdot |B(t)|^4) + a_5 \cdot (p_1 \cdot |A(t)| + p_2 \cdot |B(t)|) + a_3)) \tag{10}$$

In Equation (10) above, the term of $a_5 \cdot (p_1 \cdot |A(t)|^2 + p_2 \cdot |B(t)|^2) + a_3)$ in Equation (9) above is approximated by the term of $a_5 \cdot (p_1 \cdot |A(t)| + p_2 \cdot |B(t)|) + a_3)$.

Specific Example 2

In a transmission signal, three or more signals may also be included and it is also possible to cancel the intermodulation signal generated due to intermodulation of these three signals. Thus, in specific example 2, consider the case in which the complex signal A(t) with the frequency f1, the complex signal B(t) with the frequency f2, and the complex signal D(t) with the frequency f3 are included in a transmission signal and the intermodulation signal that is generated from these complex signals leaks into the reception path and is added to the reception signal. From these three complex signals, an intermodulation signal with the frequency equal to the sum of multiples of the frequencies of the complex signals and the difference thereof is produced. In the following, a cancellation signal that cancels out the intermodulation signal produced in, for example, the frequency (f1+f2-f3) will be described.

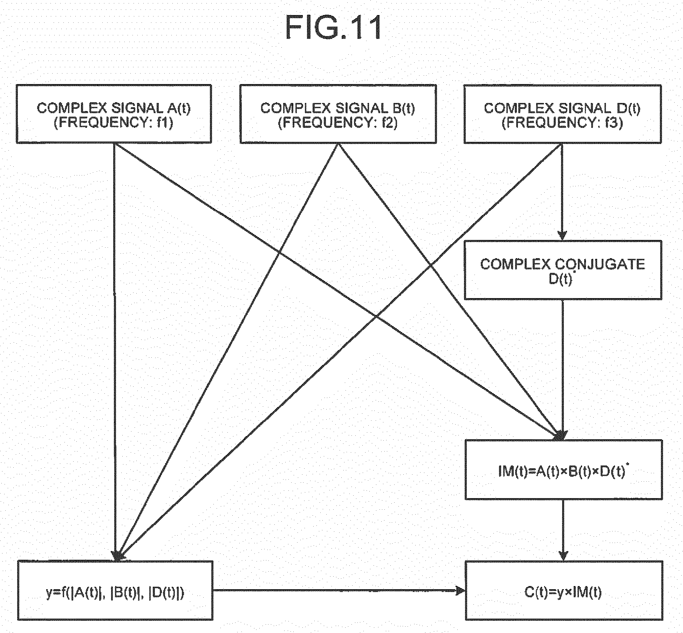

In this case, as illustrated in FIG. 11, a complex conjugate D(t)* of the complex signal D(t) is calculated by the cancellation signal generating unit 113 and the theoretical intermodulation signal IM(t) is obtained by Equation (11) below.

$$IM(t) = A(t) \times B(t) \times D(t)^* \tag{11}$$

Furthermore, a correction coefficient y is calculated by the cancellation signal generating unit 113 by using the function f(A(t)|, |B(t)|, |D(t)|) in which the amplitude of the complex signals A(t), B(t), and D(t) are variables. This correction coefficient y is multiplied by the theoretical intermodulation signal IM(t) and the cancellation signal C(t) is obtained.

The function for calculating the correction coefficient y varies in accordance with the relationship between the characteristic z of the generation source of the intermodulation signal and the sum w of the transmission signals that are associated with the three complex signals A(t), B(t), and D(t). Namely, for example, if the sum w of the transmission signals and the characteristic z of the intermodulation signal generation source can be represented by Equation (12) below, the correction coefficient y can be represented by Equation (13) below.

$$z = a_1 w + a_3 w^3 + a_5 w^5 \tag{12}$$

$$y = (a_5 \cdot (p_1 \cdot |A(t)|^2 + p_2 \cdot |B(t)|^2 + p_3 \cdot |D(t)|^2) + a_3) \tag{13}$$

where, each of $a_1$, $a_3$, $a_5$, $p_1$, $p_2$, and $p_3$ is a predetermined coefficient. Similarly, for example, the sum w of the transmission signals and the characteristic z of the intermodulation signal generation source can be represented by Equation (14) below, the correction coefficient y can be represented by Equation (15) below.

$$z = a_1 w + a_3 w^3 + a_5 w^5 + a_7 w^7 \tag{14}$$

$$y = (a_7 \cdot (q_1 \cdot |A(t)|^4 + q_2 \cdot |B(t)|^4 + q_3 \cdot |D(t)|^4 + q_4 \cdot |A(t)|^2 \cdot |B(t)|^2 + q_5 \cdot |B(t)|^2 \cdot |D(t)|^2 + q_6 \cdot |D(t)|^2 \cdot |A(t)|^2) + a_5 \cdot (p_1 \cdot |A(t)|^2 + p_2 \cdot |B(t)|^2 + p_3 \cdot |D(t)|^2) + a_3)) \tag{15}$$

where, each of $a_7$, $q_1$, $q_2$, $q_3$, $q_4$, $q_5$, and $q_6$ is a predetermined coefficient.

Specific Example 3

An intermodulation signal is not always produced only from the third-order distortion component of the plurality of signals that are included in a transmission signal. Namely, an intermodulation signal may possibly be produced from a distortion component that has an arbitrary order equal to or greater than two and that is included in the plurality of signals. Thus, in specific example 3, consider the case in which the complex signal A(t) with the frequency f1 and the complex signal B(t) with the frequency f2 are included in a transmission signal and the fifth-order distortion component that is produced by these complex signals leaks into the reception path and is added to the reception signal. From these two complex signals, a fifth-order distortion component that has the frequency equal to the sum of multiplies of the frequencies of the complex signals and the difference thereof is produced. In the following, a cancellation signal that cancels out the fifth-order distortion component produced in, for example, the frequency (3f1-2f2) will be described.

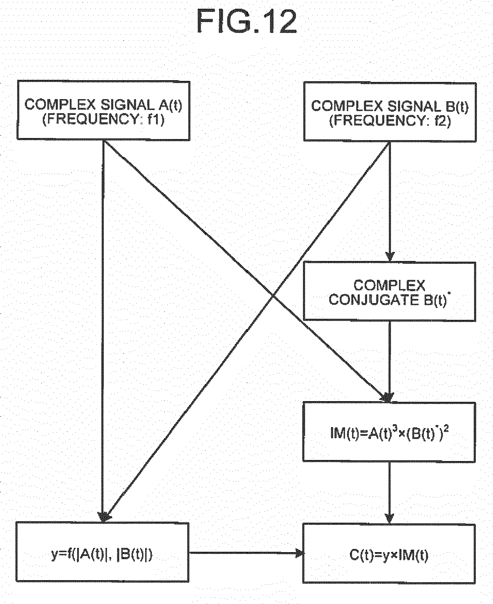

In this case, as illustrated in FIG. 12, a complex conjugate B(t)* of the complex signal B(t) is calculated by the cancellation signal generating unit 113 and the theoretical fifth-order distortion component IM(t) is obtained by Equation (16) below.

$$IM(t) = A(t)^3 \times (B(t)^*)^2 \qquad (16)$$

Furthermore, a correction coefficient y is calculated by the cancellation signal generating unit 113 by using the function f(1A(t)|, |B(t)|) in which the amplitude of the complex signals A(t) and B(t) are variable. This correction coefficient y is multiplied by the theoretical fifth-order distortion component IM(t) and the cancellation signal C(t) is obtained.

The function for calculating the correction coefficient y varies in accordance with the relationship between the characteristic z of the generation source of the intermodulation signal and the sum w of the transmission signals that are associated with the two complex signals A(t) and B(t). Namely, for example, if the sum w of the transmission signals and the characteristic z of the intermodulation signal generation source can be represented by Equation (17) below, the correction coefficient y can be represented by Equation (18) below.

$$z = a_1 w + a_3 w^3 + a_5 w^5 \qquad (17)$$

$$y = a_5 \qquad (18)$$

where, each of $a_1$, $a_3$, and $a_5$ is a predetermined coefficient. Similarly, for example, if the sum w of the transmission signals and the characteristic z of the intermodulation signal generation source can be represented by Equation (19) below, the correction coefficient y becomes Equation (20) below.

$$z = a_1 w + a_3 w^3 + a_5 w^5 + a_7 w^7 \qquad (19)$$

$$y = (a_7 \cdot (p_1 \cdot |A(t)|^2 + p_2 \cdot |B(t)|^2) + a_5) \qquad (20)$$

where, each of $a_7$, $p_1$, and $p_2$ is also a predetermined coefficient.

As specific examples 1 to 3 described above, by correcting the theoretical intermodulation signal by using the correction coefficient on the basis of the amplitude of the plurality of signals included in the transmission signal, it is possible to generate a cancellation signal that cancels the intermodulation signal that is added to the reception signal. At this time, it is possible to generate the cancellation signal that has the intermodulation distortion component that is produced from intermodulation of the signals the number of which is arbitrary number of signals equal to or greater than two included in the transmission signal and that is associated with the intermodulation distortion component with an arbitrary order equal to or greater than two.

A description will be given here by referring back to FIG. 9. The cancellation signal that is generated in a manner described above is output from the cancellation signal generating unit 113 to the combining unit 115. In contrast, the reception signal is subjected to quadrature demodulation by the quadrature demodulating unit 114 and is output to the combining unit 115. Then, the reception signal to which the intermodulation signal produced from the transmission signal is added is combined with the cancellation signal by the combining unit 115 (Step S104), whereby the intermodulation signal is removed from the reception signal. The reception signal from which the intermodulation signal has been removed is decoded by the decoding unit 116 (Step S105), whereby reception data is obtained.

As described above, according to the embodiment, the theoretical intermodulation signal is corrected by using a correction coefficient that is on the basis of the amplitude of the actual signal and then a cancellation signal is generated and is combined with the reception signal. Consequently, it is possible to cancel the intermodulation signal that leaks into the reception path and that is added to the reception signal with high accuracy and it is possible to improve the accuracy of decoding of the reception signal.

[d] Fourth Embodiment

The characteristic of a fourth embodiment is that a cancellation signal is generated by calculating the amplitude of the cancellation signal by using the function that approximates the relationship between the amplitude of each of the plurality of signals that are included in the transmission signal and the amplitude of the intermodulation signal and by calculating the phase of the cancellation signal from the phase of each of the plurality of signals.

The configuration of a radio communication apparatus according to the fourth embodiment and the function of the processor are the same as those described in the first embodiment (FIGS. 1 and 2); therefore, descriptions thereof will be omitted. In the fourth embodiment, a method of generating a cancellation signal performed by the cancellation signal generating unit 113 is different from that described in the first embodiment. Accordingly, in the following, a reception process of generating a cancellation signal according to the fourth embodiment will be described.

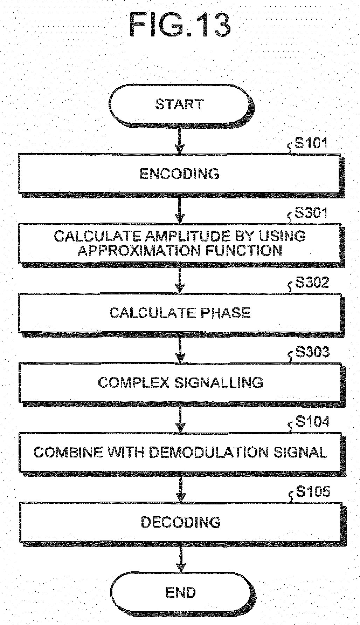

FIG. 13 is a flowchart illustrating a reception process according to a fourth embodiment. In FIG. 13, components having the same configuration as those illustrated in FIG. 3 are assigned the same reference numerals.

In the radio communication apparatus 100 according to the fourth embodiment, the transmission data is encoded by the encoding unit 111 (Step S101) and is subjected to quadrature modulation by the quadrature modulating unit 112, whereby a transmission signal that includes therein a plurality of signals that are to be sent with different frequencies are generated. The intermodulation signal produced from intermodulation of the plurality of signals included in this transmission signal is added to the reception signal.

Thus, because the association between the encoded baseband signals and the plurality of signals with different frequencies is known, by inputting an encoded baseband signal to the cancellation signal generating unit 113, a cancellation signal that is used to cancel the intermodulation signal that is added to the reception signal is generated. Specifically, by using the approximation function with respect to the amplitude of each of the plurality of signals included in the transmission signal, the amplitude of a cancellation signal is calculated by the cancellation signal generating unit 113 (Step S301). The approximation function used here is a function that approximates the relationship between the amplitude of each of the signals and the amplitude of the produced intermodulation signal. In general, as the amplitude of each of the signals is increased, the amplitude of the intermodulation signal is also increased; however, as the amplitude of each of the signals is increased, the slope of the amplitude of the intermodulation signal is decreased. Accordingly, as the approximation function, for example, a hyperbolic function or the like may also be used.

Furthermore, the phase of the cancellation signal is calculated from the phase of the plurality of signals included in the transmission signal by the cancellation signal generating unit 113 (Step S302). Namely, the phase of the intermodulation signal produced from the plurality of signals included in the transmission signal is calculated. Then, by introducing a complex signal that has the calculated amplitude and the phase of the cancellation signal (Step S303), the cancellation signal that corresponds to the intermodulation signal that is added to the reception signal is generated.

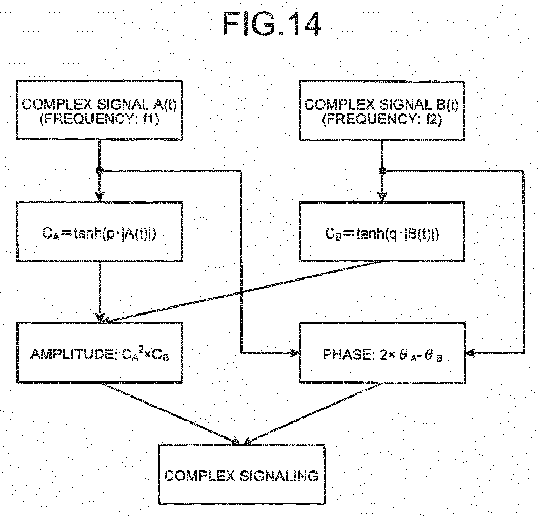

To give a more specific example, the cancellation signal is generated, for example, in a manner illustrated in FIG. 14. Namely, consider the case in which the complex signal A(t) with the frequency f1 and the complex signal B(t) with the frequency f2 are included in a transmission signal and the third-order distortion component that is produced by these complex signal leaks into the reception path and is added to the reception signal. In this case, as illustrated in FIG. 14, the amplitude components $C_A$ and $C_B$ of the intermodulation signal associated with each of the complex signals is calculated by the cancellation signal generating unit 113 by using a hyperbolic function tanh for the amplitude of each of the complex signals. Namely, the amplitude components $C_A$ and $C_B$ associated with the complex signals A(t) and B(t), respectively, are calculated by Equation (21) below.

$$C_A = \tanh(p \cdot |A(t)|)$$

$$C_B = \tanh(q \cdot |B(t)|) \qquad\qquad (21)$$

where, in Equation (21), p and q are predetermined parameters. Then, the amplitude |C(t)| of the cancellation signal associated with the third-order distortion component is further calculated by Equation (22) below.

$$|C(t)|=C_A^2 \times C_B \qquad (22)$$

In contrast, if the phase of the complex signals A(t) and B(t) are represented by $\theta_A$, $\theta_B$, respectively, the phase $\theta_C$ of the cancellation signal associated with the third-order distortion component is calculated by Equation (23) below.

$$\theta_C = 2 \times \theta_A - \theta_B \qquad (23)$$

Then, the complex signal that has the amplitude $|C(t))|$ and the phase $\theta_C$ calculated by Equations (22) and (23) above becomes the cancellation signal.

In the fourth embodiment, the amplitude of the cancellation signal is calculated by using the approximation function that approximates the relationship between the amplitude of the plurality of signals included in the transmission signal and the amplitude of the intermodulation signal and the phase of the cancellation signal is calculated from the phase of the plurality of signals included in the transmission signal. Consequently, by appropriately selecting an approximation function, it is possible to generate, with high accuracy, a cancellation signal that approximates the intermodulation signal produced from the transmission signal.

The cancellation signal generated in this way is output from the cancellation signal generating unit 113 to the combining unit 115. In contrast, the reception signal is subjected to quadrature demodulation by the quadrature demodulating unit 114 and is output to the combining unit 115. Then, the reception signal to which the third-order distortion component generated from the transmission signal is added is combined with the cancellation signal by the combining unit 115 (Step S104), whereby the third-order distortion component is removed from the reception signal. The reception signal from which the third-order distortion component has been removed is decoded by the decoding unit 116 (Step S105), whereby the reception data is obtained.

As described above, according to the embodiment, the amplitude of the cancellation signal is calculated by using an approximation function that approximates the relationship between the amplitude of the plurality of signals included in the transmission signal and the amplitude of the intermodulation signal; the phase of the cancellation signal is calculated from the phase of the plurality of signals included in the transmission signal; and the cancellation signal is combined with the reception signal. Consequently, it is possible to cancel, with high accuracy, the intermodulation signal that leaks into the reception path and that is added to the reception signal and it is possible to improve the accuracy of decoding the reception signal. In other words, even if a transmission signal that includes therein signals with a plurality of frequencies is sent, it is possible to suppress a decrease in the reception quality due to the intermodulation signal. Furthermore, by appropriately selecting an approximation function, it is possible to generate, with high accuracy, a cancellation signal that approximates the intermodulation signal produced from the transmission signal.

Furthermore, in the fourth embodiment described above, it is assumed that the amplitude of the cancellation signal is calculated by using the approximation function; however, the approximation function does not always need to be used. Namely, for example, it may also acquire the amplitude of the cancellation signal by previously storing a table that stores therein the amplitude of cancellation signals associated with the amplitude of the signals in the memory 180 and by referring the table performed by the cancellation signal generating unit 113.

[e] Fifth Embodiment

The characteristic of a fifth embodiment is that a cancellation signal is made to delay and a phase difference is adjusted by taking into consideration a delay in returning to the digital circuit after an intermodulation signal is produced from a transmission signal in a passive component.

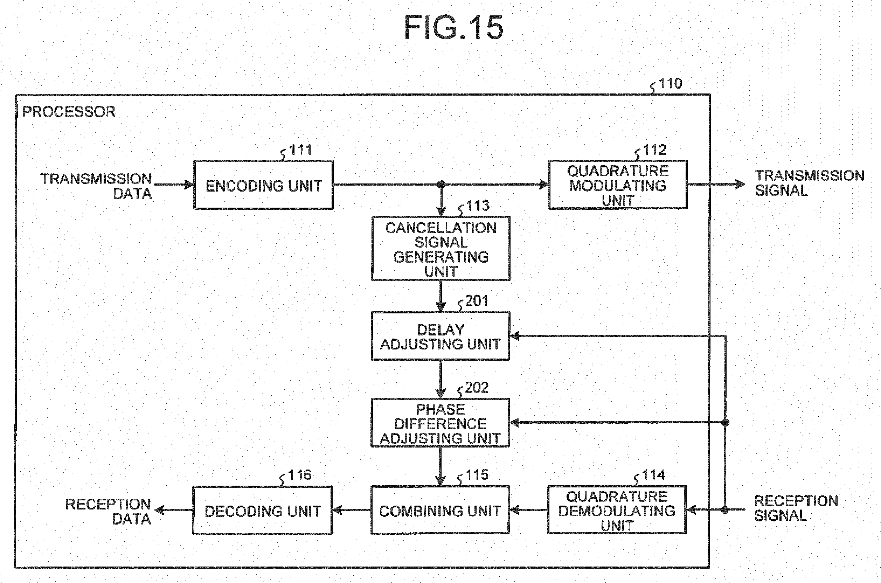

The configuration of a radio communication apparatus according to the fifth embodiment is the same as that of the first embodiment (FIG. 1); therefore, the description thereof will be omitted. In the fifth embodiment, the function of the processor 110 is different from that of the first embodiment. FIG. 15 is a block diagram illustrating the function of the processor 110 according to a fifth embodiment. In FIG. 15, components having the same configuration as those illustrated in FIG. 2 are assigned the same reference numerals and descriptions thereof will be omitted. In the processor 110 illustrated in FIG. 15, a delay adjusting unit 201 and a phase difference adjusting unit 202 are added to the processor 110 illustrated in FIG. 2.

The delay adjusting unit 201 detects a delay of an intermodulation signal, which is produced in a pass route between the duplexer 150 and the antenna or produced in an external intermodulation generation source due to the transmission signal that is used by the cancellation signal generating unit 113 to generate a cancellation signal, to return to the processor 110. Specifically, the delay adjusting unit 201 calculates a correlation value between the cancellation signal generated by the cancellation signal generating unit 113 and the reception signal to which the intermodulation signal is added and detects the timing at which the intermodulation signal associated with the cancellation signal is input to the processor 110. Namely, if the intermodulation signal associated with the cancellation signal is added to the reception signal, because the correlation value between the cancellation signal and the reception signal becomes large, the delay adjusting unit 201 detects a delay timing of the intermodulation signal by detecting the timing at which the correlation value between the cancellation signal and the reception signal becomes, for example, the maximum. Then, the delay adjusting unit 201 outputs the cancellation signal to the phase difference adjusting unit 202 at the detected delay timing.

The phase difference adjusting unit 202 detects a phase difference between the cancellation signal that is generated by the cancellation signal generating unit 113 and the intermodulation signal that is added to the reception signal and then adjusts the phase of the cancellation signal. Specifically, as the result of the correlation calculation in the delay adjusting unit 201, the phase difference adjusting unit 202 calculates a phase difference from a complex value of the maximum correlation value and adjusts the phase of the cancellation signal by an amount corresponding to this phase difference. Then, the phase difference adjusting unit 202 outputs the cancellation signal, in which the phase has been adjusted, to the combining unit 115.

In the fifth embodiment, the delay adjusting unit 201 makes the cancellation signal to delay by taking into consideration a delay of an intermodulation signal, which is produced in a passive component provided in the pass route between the duplexer 150 and the antenna or produced in an external intermodulation generation source, to be input to the processor 110 via the down converter 160 and the AD converter 170. Furthermore, the phase difference adjusting unit 202 adjusts the phase difference due to the delay and then inputs the cancellation signal to the combining unit 115. Consequently, both the intermodulation signal added to the reception signal and the cancellation signal associated with the intermodulation signal are input to the combining unit 115 at the same timing and with the same phase, whereby the intermodulation signal can be reliably cancelled out by the cancellation signal.

Furthermore, the cancellation signal generated by the cancellation signal generating unit 113 may also be generated by using any one of the methods described in the first to the fourth embodiments. Furthermore, the portion in which an intermodulation signal is produced may also be a cable, a connector, or the like provided on a pass route from the duplexer 150 to the antenna or may also be an external unit of the radio communication apparatus as long as the position is provided on the path through which the transmission signal is transmitted.

As described above, according to the embodiment, a cancellation signal is made to delay and the phase is adjusted by taking into consideration both the delay of the intermodulation signal to be input to a processor and the phase difference. Consequently, it is possible to combine the cancellation signal associated with the intermodulation signal with the reception signal and thus it is possible to reliably remove the intermodulation signal from the reception signal.

[f] Sixth Embodiment

The characteristic of a sixth embodiment is that a cancellation signal is generated while changing a parameter for generating a cancellation signal such that the cancellation signal component remaining in the reception signal in which the intermodulation signal has been cancelled become the minimum.

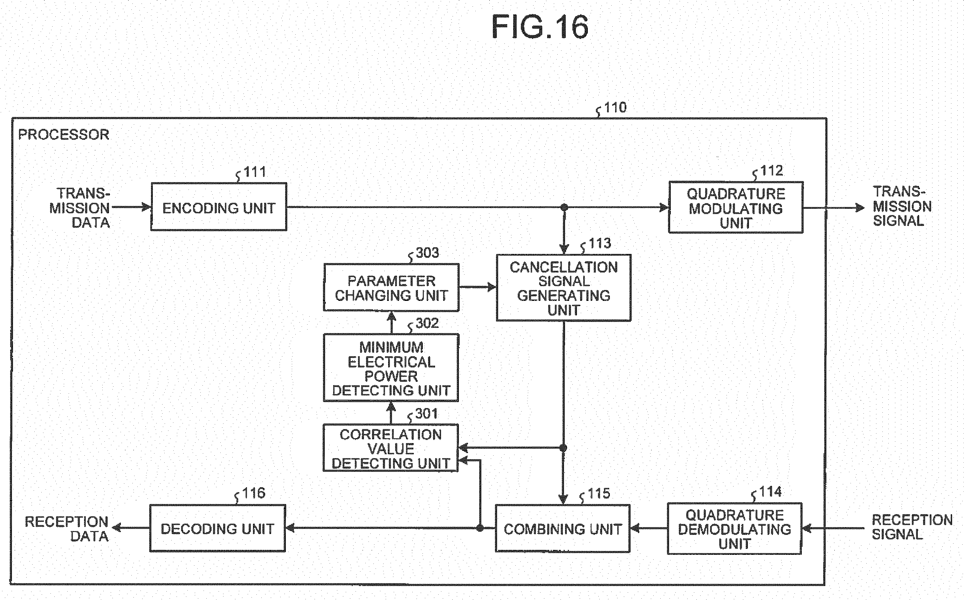

The configuration of a radio communication apparatus according to the sixth embodiment is the same as that described in the first embodiment (FIG. 1); therefore, the description thereof will be omitted. In the sixth embodiment, the function of the processor 110 is different from that described in the first embodiment. FIG. 16 is a block diagram illustrating the function of the processor 110 according to a sixth embodiment. In FIG. 16, components having the same configuration as those illustrated in FIG. 2 are assigned the same reference numerals and descriptions thereof will be omitted. In the processor 110 illustrated in FIG. 16, a correlation value detecting unit 301, a minimum electrical power detecting unit 302, and a parameter changing unit 303 are added to the processor 110 illustrated in FIG. 2.

The correlation value detecting unit 301 detects a correlation value between the cancellation signal that is generated by the cancellation signal generating unit 113 and the reception signal that is output from the combining unit 115. Namely, the correlation value detecting unit 301 detects a cancellation signal component remaining in the reception signal that is combined with the cancellation signal by the combining unit 115 and in which the intermodulation signal has been removed. At this point, if the accuracy of the cancellation signal generated by the cancellation signal generating unit 113 is favorable, this cancellation signal and the intermodulation signal that is added to the reception signal match and both the cancellation signal and the intermodulation signal are cancelled out in the combining unit 115. Consequently, the cancellation signal component remaining in the reception signal that is output from the combining unit 115 is decreased. Accordingly, if the correlation value detected by the correlation value detecting unit 301 is small, this indicates that the accuracy of the cancellation signal generated by the cancellation signal generating unit 113 is favorable.

The minimum electrical power detecting unit 302 detects, when a parameter is sequentially changed by the parameter changing unit 303, the minimum value of the correlation value (hereinafter, referred to as "minimum electrical power") detected by the correlation value detecting unit 301. Namely, the minimum electrical power detecting unit 302 instructs the parameter changing unit 303 to sequentially change the parameter until the minimum electrical power is detected. Then, if the minimum electrical power is detected, the minimum electrical power detecting unit 302 instructs the parameter changing unit 303 to set the parameter that is associated with the minimum electrical power.

The parameter changing unit 303 sequentially changes, in accordance with the instruction from the minimum electrical power detecting unit 302, the parameter that is used when the cancellation signal is generated by the cancellation signal generating unit 113. Specifically, if a cancellation signal according to, for example, the first embodiment is generated, the parameter changing unit 303 sequentially changes the order of the model that is used when the cancellation signal. Furthermore, if a cancellation signal according to, for example, the second embodiment is generated, the parameter changing unit 303 sequentially changes, on the basis of the sum of the amplitudes, the coefficient of the function that is used to calculate the correction coefficient. Then, if the parameter changing unit 303 receives an instruction from the minimum electrical power detecting unit 302 to set the parameter that is associated with the minimum electrical power, the parameter changing unit 303 sets the parameter, from among the sequentially changed parameters, that is used at the time of detection of the minimum electrical power in the cancellation signal generating unit 113.

In the sixth embodiment, the parameter that minimizes the cancellation signal component remaining in the reception signal that is combined with the cancellation signal while sequentially changing the parameter that is used when a cancellation signal is generated. Namely, a parameter for generating a cancellation signal that cancels out the intermodulation signal with the highest accuracy that is added to the reception signal is determined and a cancellation signal is to be generated by the determined parameter. Consequently, it is possible to determine the best parameter that is adaptively fit on the basis of the correlation value between the cancellation signal and reception signal that has been combined with the cancellation signal and it is possible to generate an accurate cancellation signal.

Furthermore, the cancellation signal generated by the cancellation signal generating unit 113 may also be generated by using any one of the methods described in the first to the fourth embodiments. Furthermore, while sequentially changing all or some of parameters that are used in each of the methods, the parameter changing unit 303 finally sets an optimum parameter associated with the minimum electrical power in the cancellation signal generating unit 113. Furthermore, the portion in which an intermodulation signal is produced may also be a cable, a connector, or the like provided on a pass route from the duplexer 150 to the antenna as long as the position is provided on the path through which the transmission signal is transmitted.

As described above, according to the embodiment, a correlation value between the cancellation signal and the reception signal that has been combined with the cancellation signal is detected by sequentially changing the parameter that is used when the cancellation signal is generated and then the parameter that minimizes the correlation value is determined. Then, a cancellation signal is generated by using the determined parameter. Consequently, it is possible to determine the best parameter that is adaptively fit; it is possible to generate an accurate cancellation signal; and it is possible to further improve the accuracy of decoding the reception signal.

[g] Seventh Embodiment

The characteristic of a seventh embodiment is that, in a radio communication apparatus in which a transmission path and a reception path of a signal are separated, the intermodulation signal produced outside the device is cancelled.

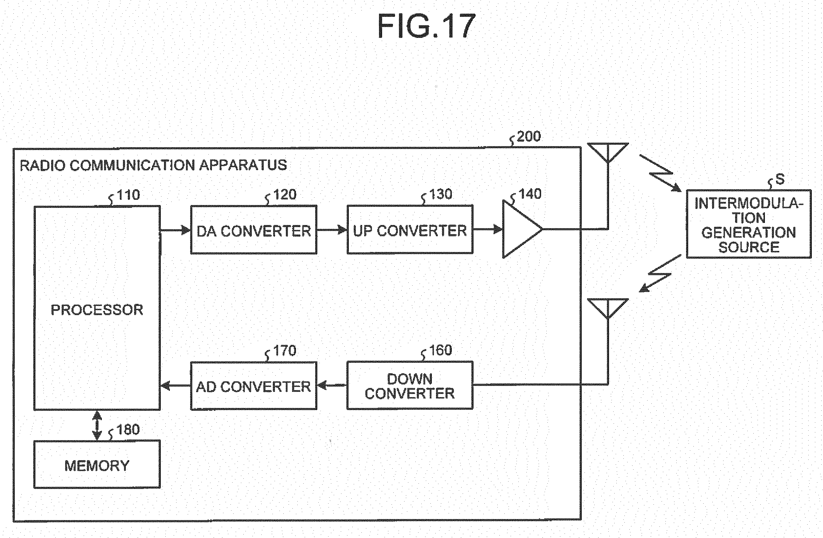

FIG. 17 is a block diagram illustrating the configuration of a radio communication apparatus 200 according to a seventh embodiment. In FIG. 17, components having the same configuration as those illustrated in FIG. 1 are assigned the same reference numerals. The radio communication apparatus 200 illustrated in FIG. 17 has the configuration in which the duplexer 150 included in the radio communication apparatus 100 illustrated in FIG. 1 is eliminated and the transmission path and the reception path of a signal are separated. With this configuration, even if a transmission signal that includes therein a plurality of signals that are to be sent with different frequencies is sent by passing through a transmission path, an intermodulation signal that is produced due to intermodulation of the plurality of signals does not leak into the reception path inside the radio communication apparatus 200.

However, if an intermodulation generation source S, such as a metal or the like, is arranged close to the radio communication apparatus 200, the plurality of signals that have different frequencies and that is included in a radio transmission signal that is sent from the transmission antenna is subjected to intermodulation in the intermodulation generation source S. Consequently, an intermodulation signal is produced and the produced intermodulation signal is input to a reception antenna together with the reception signal. Accordingly, even if the transmission path and the reception path are separated, the intermodulation signal may possibly be added to the reception signal.

Thus, the processor 110 in the radio communication apparatus 200 according to the seventh embodiment generates, similarly to the processor 110 in the radio communication apparatus 100 according to the first to the sixth embodiments described above, a cancellation signal from a plurality of signals that are included in a transmission signal and combines the cancellation signal with the reception signal. Consequently, it is possible to cancel out the intermodulation signal that is produced outside the radio communication apparatus 200 and that is added to the reception signal and it is possible to suppress a decrease in the reception quality due to the intermodulation signal.

As described above, according to the embodiment, a cancellation signal is generated from a plurality of signals included in the transmission signal and the intermodulation signal that is produced in an external intermodulation generation source and that is added to the reception signal is cancelled out by the cancellation signal. Consequently, even if the transmission path and the reception path inside the radio communication apparatus are separated, it is possible to cancel, with high accuracy, the intermodulation signal added to the reception signal and thus it is possible to suppress a decrease in the reception quality due to the intermodulation signal.

[h] Eighth Embodiment

The characteristic of an eighth embodiment is that an intermodulation signal is cancelled in a radio communication system in which a baseband unit and a radio unit are provided as individual units.

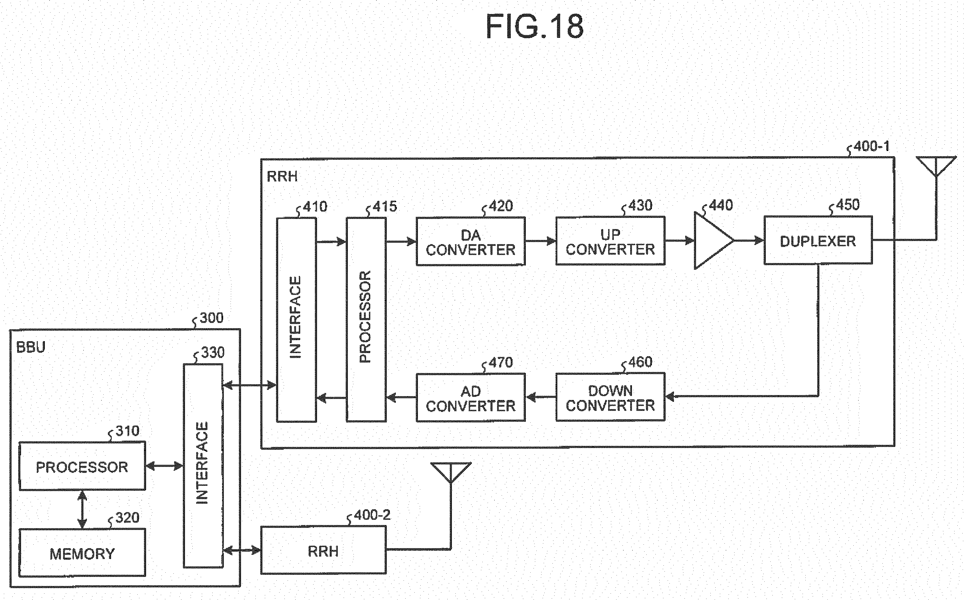

FIG. 18 is a block diagram illustrating the configuration of a radio communication system according to the eighth embodiment. The radio communication system illustrated in FIG. 18 includes a baseband unit (BBU) 300 and a remote radio heads (RRH) 400-1 and 400-2. Furthermore, in FIG. 18, the two RRHs 400-1 and 400-2 are illustrated; however, one or three or more RRHs may also be connected to the BBU 300. Furthermore, because the RRH 400-2 has the same internal configuration as that of the RRH 400-1, in FIG. 18, the internal configuration of the RRH 400-2 is omitted.

The BBU 300 performs a baseband process and sends baseband signals including transmission data to the RRHs 400-1 and 400-2. Furthermore, the BBU 300 receives baseband signals including reception data from the RRHs 400-1 and 400-2 and performs the baseband process on the baseband signals. Specifically, the BBU 300 includes a processor 310, a memory 320, and an interface 330.

The processor 310 includes, for example, a CPU, an FPGA, a DSP, or the like and generates, from the transmission data, the baseband signals that include therein a plurality of signals that are to be sent with different frequencies. Furthermore, the processor 310 obtains reception data from the baseband signals that are received from the RRHs 400-1 and 400-2. At this time, the processor 310 generates, on the basis of the sent baseband signals, a cancellation signal that is used to cancel an intermodulation signal that is included in the received baseband signals and then cancels out the intermodulation signal by using the cancellation signal.

The memory 320 includes, for example, a RAM, a ROM, or the like and stores therein information that is used by the processor 310 to perform a process. Namely, the memory 320 stores therein a parameter or the like that is used when, for example, the processor 310 generates a cancellation signal.

The interface 330 is connected to the RRHs 400-1 and 400-2 by, for example, optical fibers or the like and sends and receives the baseband signals to and from the RRHs 400-1 and 400-2. In the baseband signals sent by the interface 330, a plurality of signals that are to be sent by using different frequencies is included. The plurality of signals that are to be sent by using different frequencies may also be collectively sent one of the RRHs 400-1 and 400-2 or may also be separately sent to each of the RRHs 400-1 and 400-2.

The RRHs 400-1 and 400-2 up-convert the baseband signals received from the BBU 300 to the radio frequency and send the obtained radio transmission signals via the antenna. Furthermore, the RRHs 400-1 and 400-2 downconvert the radio reception signals received via the antenna to the baseband frequency and send the obtained baseband signals to the BBU 300. Specifically, each of the RRHs 400-1 and 400-2 includes an interface 410, a processor 415, a DA converter 420, an up converter 430, an amplifier 440, a duplexer 450, a down converter 460, and an AD converter 470.

The interface 410 is connected to the BBU 300 by, for example, optical fibers or the like and sends and receives a baseband signal to and from the BBU 300.

The processor 415 performs quadrature modulation on the baseband signal received by the interface 410 and then outputs the signal to the DA converter 420. Furthermore, because nonlinear distortion may possibly be produced due to amplification in the amplifier 440, the processor 415 may also include a distortion compensation circuit or the like that performs a predistortion process on the baseband signal. Furthermore, the processor 415 performs quadrature demodulation on the baseband signal that is output from the AD converter 470 and then outputs the signal to the interface 410. Regarding to the baseband signal that is output to the interface 410, the intermodulation signal that is produced due to intermodulation of the transmission signal is added.

The DA converter 420 performs DA conversion on the baseband signal that is output from the processor 415 and outputs the obtained analog baseband signal to the up converter 430.

The up converter 430 up-converts the baseband signal that is output from the DA converter 420 to the radio frequency and generates a radio transmission signal. Then, the up converter 430 outputs the generated radio transmission signal to the amplifier 440.

The amplifier 440 amplifies the radio transmission signal that is output from the up converter 430.

The duplexer 450 sends the radio transmission signal output from the amplifier 440 via a connector, a cable, and the antenna. Furthermore, the duplexer 450 outputs, to the down converter 460, the radio reception signal that is received by the antenna and that passes through the cable and the connector. Because the frequency of the radio transmission signal is different from that of the radio reception signal, the duplexer 450 electrically separates the transmission path from the reception path such that the radio transmission signal does not leak into the reception path.

The path between the duplexer 450 and the antenna includes passive components, such as the connector, the cable, the antenna, or the like. If a plurality of signals with different frequencies is included in a radio transmission signal, an intermodulation signal is produced because the plurality of signals is modulated each other due to a point of discontinuity of the impedance of the passive components or the minute nonlinear distortion generated in the passive component. Namely, because the path between the duplexer 450 and the antenna and an external propagation path of each of the devices become the pass routes for both the radio transmission signal and the radio reception signal, the intermodulation signals produced in these pass routes are added to the radio reception signal.

In contrast, even if the plurality of signals with different frequencies is not included in the radio transmission signal, if the frequency of the radio transmission signal that is sent from each of the RRHs 40C-1 and 400-2 differs and if an intermodulation generation source is present outside the RRHs 400-1 and 400-2, an intermodulation signal is produced. Then, the intermodulation signal produced outside is received by the antenna and is added to the radio reception signal.

The down converter 460 down-converts the radio reception signal that is output from the duplexer 450 to the baseband frequency and then outputs the obtained baseband signal to the AD converter 470.

The AD converter 470 performs AD conversion on the baseband signal that is output from the down converter 460 and then outputs the obtained digital baseband signal to the processor 415.

In the embodiment, an intermodulation signal that is produced inside or outside the RRH 400-1 or 400-2 is added to the reception signal received by the RRH 400-1 or 400-2. Then, the reception signal to which the intermodulation signal is added is sent to the BBU 300. The processor 310 in the BBU 300 generates all of the transmission signals sent from the RRHs 400-1 and 400-2 and can generate a cancellation signal associated with an intermodulation signal that is produced due to intermodulation of these transmission signals. Thus, the processor 310 generates, similarly to the processor 110 in the radio communication apparatus 100 according to the first to the sixth embodiments described above, a cancellation signal on the basis of the plurality of signals sent from the RRHs 400-1 and 400-2 and combines the cancellation signal with the reception signal. Consequently, it is possible to cancel out the intermodulation signal that is produced inside or outside the RRHs 400-1 or 400-2 and that is added to the reception signal and it is possible to suppress a decrease in the reception quality of the intermodulation signal.

As described above, according to the embodiment, in the BBU that is connected to a plurality of RRHs, a cancellation signal is generated on the basis of the plurality of signals that are to be sent from the plurality of RRHs and an intermodulation signal that is added to the reception signal received by each of the RRHs is canceled out by the cancellation signal. Consequently, in the radio communication system in which the baseband unit and the radio unit are provided as individual units, it is possible to cancel the intermodulation signal added to the reception signal with high accuracy and it is possible to suppress a decrease in the reception quality due to the intermodulation signal.

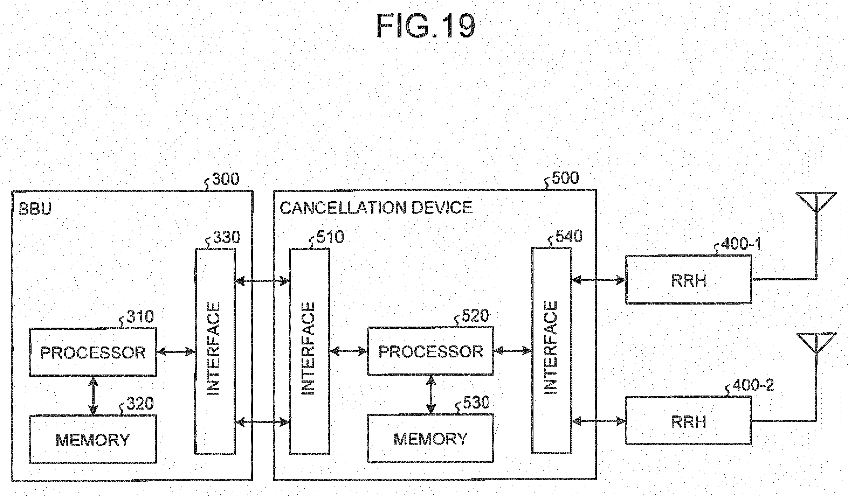

Furthermore, in the eighth embodiment described above, the processor 310 in the BBU 300 generates a cancellation signal from a transmission signal and combines the cancellation signal with the reception signal; however, it may also be possible to independently provide a device that has a function for cancelling an intermodulation signal. FIG. 19 is a block diagram illustrating the configuration of the radio communication system that includes a cancellation device 500 that cancels an intermodulation signal. In FIG. 19, components having the same configuration as those illustrated in FIG. 18 are assigned the same reference numerals and descriptions thereof will be omitted. The radio communication system illustrated in FIG. 19 includes, in addition to the BBU 300 and the RRHs 400-1 and 400-2, the cancellation device 500.

The cancellation device 500 is connected between the BBU 300 and the RRHs 400-1 and 400-2 and relays a baseband signal that is sent and received between the BBU 300 and the RRHs 400-1 and 400-2. Furthermore, the cancellation device 500 generates, on the basis of the baseband signal sent from the BBU 300 to the RRHs 400-1 and 400-2, a cancellation signal associated with the intermodulation signal and combines the cancellation signal with the baseband signal that is sent from the RRHs 400-1 and 400-2 to the BBU 300. Specifically, the cancellation device 500 includes interfaces 510 and 540, a processor 520, and a memory 530.

The interface 510 is connected to the BBU 300 and sends and receives a baseband signal to and from the BBU 300. Namely, the interface 510 receives the transmission signal generated by the processor 310 from the interface 330 in the BBU 300, whereas the interface 510 sends the reception signal received by the RRHs 400-1 and 400-2 to the interface 330 in the BBU 300. In the transmission signal that is received by the interface 510 from the BBU 300, a plurality of signals that are to be sent with different frequencies is included. The plurality of signals that are to be sent with different frequencies may also be collectively sent one of the RRHs 400-1 and 400-2 or may also be separately sent to each of the RRHs 400-1 and 400-2.

The processor 520 includes, for example, a CPU, an FPGA, a DSP, or the like and generates, on the basis of the plurality of signals received by the interface 510, a cancellation signal that is used to cancel an intermodulation signal. Furthermore, the processor 520 combines the cancellation signal with the signal that is received by the interface 540 and cancels out the intermodulation signal that is added to the reception signal.

The memory 530 includes, for example, a RAM, a ROM, or the like and stores therein information that is used by the processor 520 to perform a process. Namely, the memory 530 stores therein a parameter or the like that is used when, for example, the processor 520 generates a cancellation signal.

The interface 540 is connected to the RRHs 400-1 and 400-2 by, for example, optical fibers or the like and sends and receives a baseband signal to and from the RRHs 400-1 and 400-2. Namely, the interface 540 sends the transmission signal received from the BBU 300 to the RRHs 400-1 and 400-2, whereas the interface 540 receives, from the RRHs 400-1 and 400-2, the reception signal received by the RRHs 400-1 and 400-2. In the transmission signal that is sent by the interface 540 to the RRHs 400-1 and 400-2, a plurality of signals that are to be sent with different frequencies is included. The plurality of signals that are to be sent with different frequencies may also be collectively sent to one of the RRHs 400-1 and 400-2 or may also be separately sent to each of the RRHs 400-1 and 400-2. Furthermore, regarding the reception signal that is received by the interface 540 from the RRHs 400-1 and 400-2, an intermodulation signal that is produced inside or outside of the RRHs 400-1 and 400-2 is added.

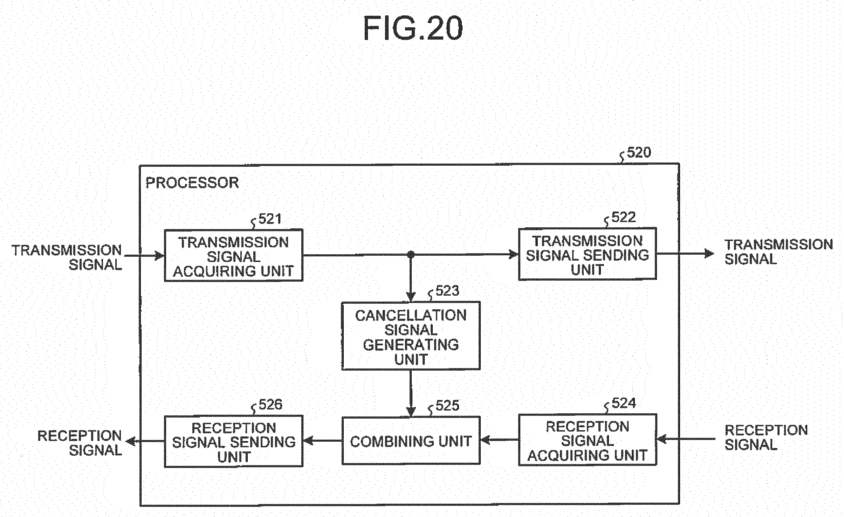

FIG. 20 is a block diagram illustrating the function of the processor 520. The processor 520 illustrated in FIG. 20 includes a transmission signal acquiring unit 521, a transmission signal sending unit 522, a cancellation signal generating unit 523, a reception signal acquiring unit 524, a combining unit 525, and a reception signal sending unit 526. Furthermore, each of the processing units may also be configured by hardware or may also be configured by software.

The transmission signal acquiring unit 521 acquires, from the interface 510, the transmission signal that is generated in and sent from the BBU 300. At this time, the transmission signal acquiring unit 521 acquires a transmission signal that includes therein a plurality of signals that are to be sent from the RRHs 400-1 and 400-2 with different frequencies.

The transmission signal sending unit 522 outputs the transmission signal acquired by the transmission signal acquiring unit 521 to the interface 540 and allows the transmission signal to be sent to the RRHs 400-1 and 400-2.

The cancellation signal generating unit 523 generates, from the plurality of signals included in the transmission signal, a cancellation signal that is used to cancel out the intermodulation signal. Specifically, the cancellation signal generating unit 523 acquires, from the transmission signal, two baseband signals that are associated with the intermodulation signal and that have the frequency included in the reception band of the RRHs 400-1 and 400-2 and generates a cancellation signal on the basis of these baseband signals. At this time, as described in the first to the sixth embodiments described above, the cancellation signal generating unit 523 calculates a cancellation signal associated with the intermodulation signal on the basis of the product of the power or on the basis of the amplitude of the plurality of signals included in the transmission signal.

The reception signal acquiring unit 524 acquires, from the interface 540, the reception signals that are received and are down converted by the RRHs 400-1 and 400-2. At this time, the reception signal acquiring unit 524 acquires the reception signals to each of which the intermodulation signal that is produced due to the signals sent from the RRHs 400-1 and 400-2 with different frequencies is added.

The combining unit 525 combines each of the reception signals that are acquired by the reception signal acquiring unit 524 and to each of which the intermodulation signal is added with the cancellation signal that is generated by the cancellation signal generating unit 523. Namely, by combining the cancellation signal with each of the reception signals, the combining unit 525 cancels out the intermodulation signal that is added to the reception signal.

The reception signal sending unit 526 outputs, to the interface 510, the reception signal in which the intermodulation signal is canceled by the combining unit 525 and allows the reception signal to be sent to the BBU 300.

In this way, the cancellation device 500 is provided independently from the BBU 300 and the RRHs 400-1 and 400-2 and generates a cancellation signal on the basis of the plurality of signals that are generated in the BBU 300 and that are to be sent with different frequencies. Then, the cancellation device 500 cancels out, by the cancellation signal, the intermodulation signal that is added to the reception signal that is received by each of the RRHs 400-1 and 400-2.

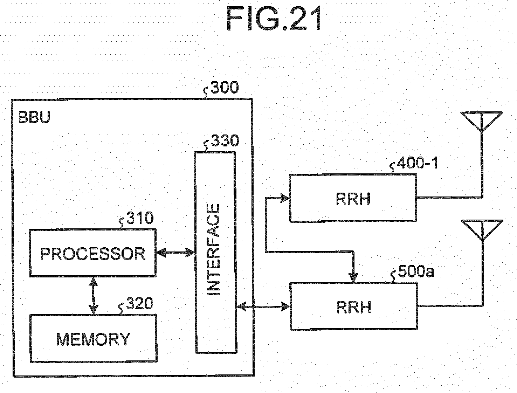

Furthermore, it is also possible to integrate the cancellation device 500 with one of the RRHs and connect this RRH to the other RRH each other. Namely, as illustrated in FIG. 21, a single RRH 500a is connected to the BBU 300 and the other RRH 400-1 is connected to the RRH 500a. The RRH 500a has the same function as that performed by the cancellation device 500 described above and sends and receives a radio signal via the antenna, similarly to the other RRH 400-1. Because the RRH 500a has the same function as that performed by the cancellation device 500, the transmission signal that is wirelessly sent from the other RRH 400-1 is sent to the RRH 400-1 via the RRH 500a. In other words, because the transmission signals that are wirelessly sent from all the RRHs pass through the RRH 500a, the RRH 500a can generate cancellation signals that cancel the intermodulation signals produced from these transmission signals. Furthermore, because the reception signals that are wirelessly sent by all the RRHs pass through the RRH 500a, the RRH 500a combines the cancellation signal with the reception signal in each of the RRH and cancels the intermodulation signal that is added to the reception signal.

In this way, in the radio communication system in which the single RRH 500a is connected to the BBU 300 and the other RRH 400-1 is connected to the BBU 300 via the RRH 500a, the intermodulation signal can be canceled by the RRH 500a.

[i] Ninth Embodiment

The characteristic of a ninth embodiment is that an intermodulation signal that is produced when a signal that has the same frequency as one of the signals and that has a different waveform is sent and when, at the same time, a plurality of signals with different frequencies is sent is canceled.

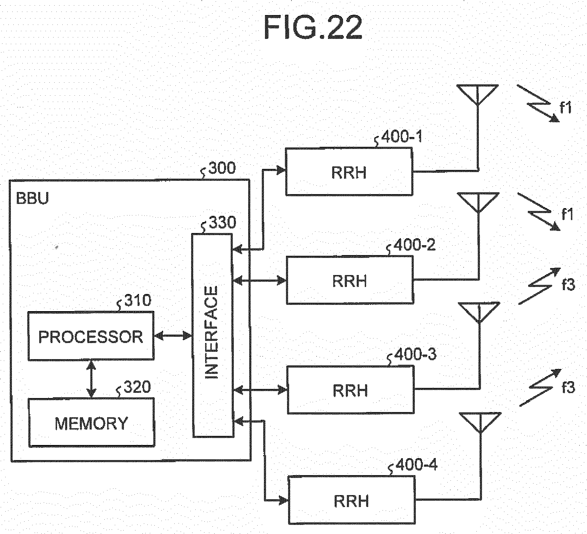

FIG. 22 is a block diagram illustrating the configuration of a radio communication system according to a ninth embodiment. In FIG. 22, components having the same configuration as those illustrated in FIG. 18 are assigned the same reference numerals and descriptions thereof will be omitted. The radio communication system illustrated in FIG. 22 has the configuration in which RRHs 400-3 and 400-4 are added to the radio communication system illustrated in FIG. 18.

With this radio communication system, the RRHs 400-1 and 400-2 send different signals with the frequency f1 and the RRHs 400-3 and 400-4 send different signals with the frequency f3. In such a case, if an intermodulation generation source is present outside the RRHs 400-1 to 400-4, an intermodulation signals are produced due to intermodulation of a plurality of signals including signals with the same frequency. Thus, the processor 310 in the BBU 300 generates cancellation signals on the basis of the plurality of signals sent from the RRHs 400-1 to 400-4 and cancels the intermodulation signals that are added to the reception signals that are received by the RRHs 400-1 to 400-4.

Specifically, similarly to the second and the third embodiments described above, the processor 310 generates a cancellation signal by correcting a theoretical intermodulation signal by using a correction coefficient that is on the basis of the amplitude of the plurality of the signals. At this point, the signals sent from the RRHs 400-1 and 400-2 with the frequency f1 are represented by $I_1$ and $I_2$, respectively, and the signals sent from the RRHs 400-3 and 400-4 with the frequency f3 are represented by $I_3$ and $I_4$, respectively. A cancellation signal C(t) that cancels the third-order distortion component produced in, for example, the frequency (2f1-f3) due to these signals can be represented by Equation (24) below.

$$C(t)=\{p_{11}|I_1|^2+p_{21}|I_2|^2+p_{31}|I_3|^2+p_{41}|I_4|^2$$

$$+p_{51}(I_1 \cdot I_2^*)+p_{61}(I_1^* \cdot I_2)+p_{71}(I_3 \cdot I_4^*)+p_{81}(I_3^* \cdot I_4)$$

$$+p_{91}\} \cdot I_1 \cdot I_1 \cdot I_3^*$$

$$+\{p_{12}|I_1|^2+p_{22}|I_2|^2+p_{32}|I_3|^2+p_{42}|I_4|^2$$

$$+p_{52}(I_1 \cdot I_2^*)+p_{62}(I_1^* \cdot I_2)+p_{72}(I_3 \cdot I_4^*)+p_{82}(I_3^* \cdot I_4)$$

$$+p_{92}\} \cdot I_1 \cdot I_2 \cdot I_3^*$$

$$+\{p_{13}|I_1|^2+p_{23}|I_2|^2+p_{33}|I_3|^2+p_{43}|I_4|^2$$

$$+p_{53}(I_1 \cdot I_2^*)+p_{63}(I_1^* \cdot I_2)+p_{73}(I_3 \cdot I_4^*)+p_{83}(I_3^* \cdot I_4)$$

$$+p_{93}\} \cdot I_2 \cdot I_2 \cdot I_3^*$$

$$+\{p_{14}|I_1|^2+p_{24}|I_2|^2+p_{34}|I_3|^2+p_{44}|I_4|^2$$

$$+p_{54}(I_1 \cdot I_2^*)+p_{64}(I_1^* \cdot I_2)+p_{74}(I_3 \cdot I_4^*)+p_{84}(I_3^* \cdot I_4)$$

$$+p_{94}\} \cdot I_1 \cdot I_1 \cdot I_4^*$$

$$+\{p_{15}|I_1|^2+p_{25}|I_2|^2+p_{35}|I_3|^2+p_{45}|I_4|^2$$

$$+p_{55}(I_1 \cdot I_2^*)+p_{65}(I_1^* \cdot I_2)+p_{75}(I_3 \cdot I_4^*)+p_{85}(I_3^* \cdot I_4)$$

$$+p_{95}\} \cdot I_1 \cdot I_2 \cdot I_4^*$$

$$+\{p_{16}|I_1|^2+p_{26}|I_2|^2+p_{36}|I_3|^2+p_{46}|I_4|^2$$

$$+p_{56}(I_1 \cdot I_2^*)+p_{66}(I_1^* \cdot I_2)+p_{76}(I_3 \cdot I_4^*)+p_{86}(I_3^* \cdot I_4)$$

$$+p_{96}\} \cdot I_2 \cdot I_2 \cdot I_4^* \qquad (24)$$

where, in Equation (24) above, $p_{11}$ to $p_{96}$ represent predetermined coefficients.

In the embodiment, because two signals with the same frequency are simultaneously sent, a theoretical third-order distortion component is obtained for each combination of signals. Namely, Equation (24) above is divided into six portions each having three lines as a set and each of the portions is associated with signals that are selected as the signals with the frequencies f1 and f3. For example, the first three lines in Equation (24) above is the portion, in order to calculate the third-order distortion component that is equal to Equation (1) above, of multiplying the square of the signal $I_1$ by the complex conjugate of the signal $I_3$ and multiplying a correction coefficient by a third-order distortion component that is in accordance with this combination of signals. Similarly, the subsequent three lines in Equation (24) above is the portion, in order to calculate the third-order distortion component that is equal to Equation (1) above, of multiplying the product of the signals $I_1$ and $I_2$ by the complex conjugate of the signal $I_3$ and multiplying a correction coefficient by a third-order distortion component that is in accordance with this combination of signals.

In this way, in addition to the signals with different frequencies, in also a case in which an intermodulation signal is produced due to intermodulation of a plurality of signals that includes therein signals with the same frequency, the processor 310 can generate a cancellation signal that cancels the intermodulation signal that is added to the reception signal. Consequently, the frequencies of the signals sent from the RRHs 400-1 to 400-4 are not limited and thus it is possible to flexibly design a radio communication system. Furthermore, for example, in also a case in which a single radio communication apparatus includes a plurality of antennas and performs Multi Input Multi Output (MIMO) communication or the like, it is possible to cancel the intermodulation signal.

As described above, according to the embodiment, a cancellation signal is generated on the basis of the plurality of signals that are to be sent by different frequencies and that are to be sent by the same frequency and the intermodulation signal added to the reception signal is canceled out by the cancellation signal. Consequently, it is possible to flexibly design a radio communication system and, in also a radio communication system that uses MIMO communication or the like, it is possible to cancel the intermodulation signal.

Furthermore, the embodiments described above can be appropriately used in combination. Specifically, for example, the first and the fifth embodiments may also be combined; a delay amount and the phase of a cancellation signal that is generated by using a previously stored model with the order may also be adjusted; and the cancellation signal may also be combined with the reception signal to which the intermodulation signal is added. Furthermore, by further combining the sixth embodiment, an appropriate order may also be determined while the order of the initial value is sequentially changed and a cancellation signal may also be generated by using the model with the determined order. Furthermore, it is also possible to perform by replacing some function. For example, in the first embodiment, the parameter for generating a cancellation signal is defined as the parameter with high cancellation accuracy. However, by replacing the process related to the setting of the parameter according to the first embodiment with the process in the sixth embodiment, even if the initial value of the parameter has low cancellation accuracy, the parameter is changed to a parameter with high cancellation accuracy in accordance with operation.

The cancellation process of the intermodulation signal described in each of the embodiments may also be described as a program of a cancellation process that can be executed by a computer. In this case, this program can be stored in a computer readable recording medium and can be introduced to the computer. An example of the computer readable recording medium includes a portable recording medium, such as a CD-ROM, a DVD disk, a USB memory, or the like, or a semiconductor memory, such as a flash memory, or the like.

According to an embodiment of one aspect of the communication device and the receiving method disclosed in the present invention, an advantage is provided in that, even if a transmission signal that includes therein signals with a plurality of frequencies is sent, it is possible to suppress a decrease in the reception quality due to an intermodulation signal.

**Claims**

1. A communication device comprising:

   a sending unit that sends a plurality of signals that are to be wirelessly sent with different frequencies;
   an acquiring unit that acquires a reception signal to which an intermodulation signal that is produced due to intermodulation of the plurality of signals is added; and
   a processor that is connected to the sending unit and the acquiring unit, wherein the processor executes a process comprising:

      generating, on the basis of the plurality of signals sent by the sending unit, a cancellation signal corresponding to the intermodulation signal; and
      combining the generated cancellation signal with the reception signal that is acquired by the acquiring unit.

2. The communication device according to claim 1, further comprising a pass route through which both a transmission signal that includes therein a plurality of signals with different frequencies and a reception signal with the frequency band including the frequency of the intermodulation signal pass, wherein
   the combining includes combining the generated cancellation signal with the reception signal that passes through the pass route and is input to the processor.

3. The communication device according to any of claim 1 or 2, wherein the generating includes generating the cancellation signal by using an operation expression that approximates a measurement result that is obtained by previously measuring the intermodulation signal that is produced due to intermodulation of the plurality of signals.

4. The communication device according to any of claims 1 to 3, wherein the generating includes
   calculating a correction coefficient associated with amplitudes of the plurality of signals,

generating, by using a predetermined operation expression, the intermodulation signal that is produced due to intermodulation of the plurality of signals, and
generating the cancellation signal by correcting the generated intermodulation signal by using the correction coefficient.

**5.** The communication device according to claim 4, wherein the calculating includes calculating the correction coefficient by using a primary function in which sum of the amplitudes of the plurality of signals is a variable.

**6.** The communication device according to any of claims 4 or 5, wherein the calculating includes calculating the correction coefficient by using a function in which an even power of magnitude of the amplitudes of the plurality of signals is a variable.

**7.** The communication device according to any of claims 4 to 6, wherein the calculating includes calculating the correction coefficient by using a function in which an even power of magnitude of the amplitudes of the plurality of signals and magnitude of the amplitudes are variables.

**8.** The communication device according to any of claims 4 to 7, wherein the generating the intermodulation signal includes representing the plurality of signals by respective complex signals and obtaining the intermodulation signal in a form of a product of power of the complex signals or complex conjugates of the complex signals.

**9.** The communication device according to any of the preceding claims, wherein the generating includes
calculating an amplitude of the cancellation signal by using an approximation function that approximates relationship between each of the amplitudes of the plurality of signals and an amplitude of the intermodulation signal,
calculating a phase of the cancellation signal on the basis of each of phases of the plurality of signals, and
generating the cancellation signal that has the calculated amplitude and the phase.

**10.** The communication device according to any of the preceding claims, wherein the processor further executes a process comprising:

detecting a delay amount of the intermodulation signal to be input to the processor;
delaying the cancellation signal by the detected delay mount; and
adjusting the phase of the cancellation signal by an amount corresponding to a phase difference that is associated with the detected delay amount.

**11.** The communication device according to any of the preceding claims, wherein
the generating includes generating the cancellation signal by executing operation on the plurality of signals by using a parameter, and wherein the process further comprises:

sequentially changing the parameter that is used for the operation for generating the cancellation signal;
detecting, every time the parameter is changed, a correlation value between the generated cancellation signal and the reception signal with which the cancellation signal is combined; and
determining a parameter that minimizes the detected correlation value as a parameter for generating the cancellation signal.

**12.** The communication device according to any of the preceding claims, wherein
the sending unit sends a signal that is sent with a same frequency band as one of the plurality of signals,
the acquiring unit acquires the reception signal to which an intermodulation signal that is produced due to intermodulation between the plurality of signals and the signal with the same frequency band is added, and
the generating includes,

calculating a correction coefficient corresponding to the amplitude of each of the signals for each combination of the plurality of signals and the signal with the same frequency band,
generating, for each combination of the signals, by using a predetermined operation expression, the intermodulation signal that is produced due to intermodulation between the plurality of signals and the signal with the same frequency band, and
generating, for each combination of the signals, the cancellation signal by correcting the generated intermodulation signal by using the correction coefficient.

**13.** The communication device according to claim 12, wherein the generating includes generating, regarding a part of combinations of the signals, the cancellation signal.

**14.** A receiving method comprising:

sending a plurality of signals that are to be wirelessly sent with different frequencies;
acquiring a reception signal to which an intermodulation signal that is produced due to intermodulation of the plurality of signals is added;
generating, on the basis of the plurality of sent signals, a cancellation signal corresponding to the intermodulation signal; and
combining the generated cancellation signal with the acquired reception signal.

# FIG.1

RADIO COMMUNICATION APPARATUS

- 110 PROCESSOR
- 120 DA CONVERTER
- 130 UP CONVERTER
- 140
- 150 DUPLEXER
- 160 DOWN CONVERTER
- 170 AD CONVERTER
- 180 MEMORY
- 100

EP 3 110 025 A1

# FIG.2

EP 3 110 025 A1

# FIG.3

START

S101

ENCODING

S102

READ ORDER

S103

GENERATE CANCELLATION SIGNAL

S104

COMBINE WITH DEMODULATION SIGNAL

S105

DECODING

END

# FIG.4

| COMPLEX SIGNAL A(t) (FREQUENCY: f1) | COMPLEX SIGNAL B(t) (FREQUENCY: f2) |

COMPLEX CONJUGATE B(t)$^{*}$

$$C(t) = A(t)^{1.8} \times B(t)^{*0.8}$$

FIG.5

# FIG.6

START

S101
ENCODING

S201
CALCULATE SUM OF AMPLITUDES IN TRANSMISSION SIGNAL

S202
CALCULATE CORRECTION COEFFICIENT

S203
GENERATE INTERMODULATION SIGNAL

S204
MULTIPLY CORRECTION COEFFICIENT

S104
COMBINE WITH DEMODULATION SIGNAL

S105
DECODING

END

# FIG.7

# FIG.8

RECEPTION SIGNAL

CANCELLATION SIGNAL

RECEPTION SIGNAL AFTER CANCELLATION

# FIG.9

START

S101
ENCODING

S210
CALCULATE CORRECTION COEFFICIENT

S203
GENERATE INTERMODULATION SIGNAL

S204
MULTIPLY CORRECTION COEFFICIENT

S104
COMBINE WITH DEMODULATION SIGNAL

S105
DECODING

END

# FIG.10

```
┌─────────────────────────┐          ┌─────────────────────────┐
│  COMPLEX SIGNAL A(t)     │          │  COMPLEX SIGNAL B(t)     │
│  (FREQUENCY: f1)         │          │  (FREQUENCY: f2)         │
└─────────────────────────┘          └─────────────────────────┘
```

COMPLEX
CONJUGATE B(t)˙

$IM(t)=A(t)^{2}\times B(t)^{˙}$

$y=f(|A(t)|, |B(t)|)$

$C(t)=y\times IM(t)$

# FIG.11

```
┌─────────────────────────┐   ┌─────────────────────────┐   ┌─────────────────────────┐
│   COMPLEX SIGNAL A(t)    │   │   COMPLEX SIGNAL B(t)    │   │   COMPLEX SIGNAL D(t)    │
│     (FREQUENCY: f1)      │   │     (FREQUENCY: f2)      │   │     (FREQUENCY: f3)      │
└─────────────────────────┘   └─────────────────────────┘   └─────────────────────────┘
```

COMPLEX CONJUGATE
$D(t)^{*}$

$IM(t)=A(t) \times B(t) \times D(t)^{*}$

$y=f(|A(t)|, |B(t)|, |D(t)|)$

$C(t)=y \times IM(t)$

# FIG.12

COMPLEX SIGNAL A(t)
(FREQUENCY: f1)

COMPLEX SIGNAL B(t)
(FREQUENCY: f2)

COMPLEX
CONJUGATE B(t)$^*$

$IM(t)=A(t)^3 \times (B(t)^*)^2$

$y=f(|A(t)|, |B(t)|)$

$C(t)=y \times IM(t)$

# FIG.13

START

↓ S101

ENCODING

↓ S301

CALCULATE AMPLITUDE BY USING
APPROXIMATION FUNCTION

↓ S302

CALCULATE PHASE

↓ S303

COMPLEX SIGNALLING

↓ S104

COMBINE WITH DEMODULATION SIGNAL

↓ S105

DECODING

↓

END

# FIG.14

# FIG.15

# FIG.16

PROCESSOR — 110

TRANS-MISSION DATA → ENCODING UNIT (111) →

QUADRATURE MODULATING UNIT (112) → TRANS-MISSION SIGNAL

PARAMETER CHANGING UNIT (303) → CANCELLATION SIGNAL GENERATING UNIT (113)

MINIMUM ELECTRICAL POWER DETECTING UNIT (302)

CORRELATION VALUE DETECTING UNIT (301)

RECEPTION DATA ← DECODING UNIT (116) ← COMBINING UNIT (115) ← QUADRATURE DEMODULATING UNIT (114) ← RECEPTION SIGNAL

EP 3 110 025 A1

FIG.17

RADIO COMMUNICATION APPARATUS ⌐200

PROCESSOR ⌐110 → DA CONVERTER ⌐120 → UP CONVERTER ⌐130 → ⌐140

INTERMODULA-TION GENERATION SOURCE ⌐S

AD CONVERTER ⌐170 ← DOWN CONVERTER ⌐160

MEMORY ⌐180

EP 3 110 025 A1

FIG.18

# FIG.19

# FIG.20

# FIG.21

# FIG.22

Europäisches
Patentamt

European
Patent Office

Office européen
des brevets

**EUROPEAN SEARCH REPORT**

Application Number

EP 16 17 4756

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 874 319 A1 (HUAWEI TECH CO LTD [CN]) 20 May 2015 (2015-05-20) | 1-11,14 | INV. H04B1/525 |
| A | * paragraph [0014] - paragraph [0022]; figure 3 * <br> * paragraph [0033] * | 12,13 | |
| X | US 2007/184782 A1 (SAHOTA GURKANWAL S [US] ET AL) 9 August 2007 (2007-08-09) * paragraph [0033] - paragraph [0036]; claim 1; figure 2 * * paragraph [0048] * | 1-11,14 | |
| X | EP 2 648 336 A1 (ST ERICSSON SA [CH]) 9 October 2013 (2013-10-09) * paragraph [0038] - paragraph [0039]; claim 1 * | 1-11,14 | |

**TECHNICAL FIELDS SEARCHED (IPC)**

H04B

The present search report has been drawn up for all claims

| Place of search | Date of completion of the search | Examiner |
|---|---|---|
| Munich | 26 October 2016 | Ciccarese, Corrado |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 17 4756

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2016

| Patent document cited in search report | | Publication date | Patent family member(s) | | Publication date |
|---|---|---|---|---|---|
| EP 2874319 | A1 | 20-05-2015 | CN | 102811069 A | 05-12-2012 |
| | | | EP | 2874319 A1 | 20-05-2015 |
| | | | WO | 2014015711 A1 | 30-01-2014 |
| US 2007184782 | A1 | 09-08-2007 | BR | PI0707364 A2 | 03-05-2011 |
| | | | CA | 2636589 A1 | 16-08-2007 |
| | | | CN | 101379718 A | 04-03-2009 |
| | | | EP | 1980028 A1 | 15-10-2008 |
| | | | JP | 4965585 B2 | 04-07-2012 |
| | | | JP | 2009526442 A | 16-07-2009 |
| | | | KR | 20080093066 A | 17-10-2008 |
| | | | US | 2007184782 A1 | 09-08-2007 |
| | | | WO | 2007092767 A1 | 16-08-2007 |
| EP 2648336 | A1 | 09-10-2013 | EP | 2648336 A1 | 09-10-2013 |
| | | | US | 2015056930 A1 | 26-02-2015 |
| | | | WO | 2013149878 A1 | 10-10-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009526442 A

**Non-patent literature cited in the description**

- Passive Intermodulation (PIM) handling for Base Stations (BS) (Release 12). *3GPP TR37.808 v12.0.0*